(19) Europäisches Patentamt
European Patent Office
Office européen des brevets

(11) EP 1 332 192 B1

(12) # EUROPÄISCHE PATENTSCHRIFT

(45) Veröffentlichungstag und Bekanntmachung des Hinweises auf die Patenterteilung:
**03.05.2006 Patentblatt 2006/18**

(21) Anmeldenummer: **01988750.4**

(22) Anmeldetag: **22.10.2001**

(51) Int Cl.:
***C09J 7/02*** *(2006.01)* ***C09J 133/08*** *(2006.01)*
***C09J 133/02*** *(2006.01)*

(86) Internationale Anmeldenummer:
**PCT/EP2001/012168**

(87) Internationale Veröffentlichungsnummer:
**WO 2002/034854 (02.05.2002 Gazette 2002/18)**

(54) **VERWENDUNG VON HAFTKLEBEMASSEN MIT ANISOTROPEN EIGENSCHAFTEN FÜR STANZPRODUKTE**

USE OF SELF-ADHESIVE MATERIALS HAVING ANISOTROPIC PROPERTIES FOR PRODUCING STAMPING PRODUCTS

UTILISATION DE MASSES AUTO-ADHESIVES PRESENTANT DES PROPRIETES ANISOTROPES DANS LA PRODUCTION DE PRODUITS DE POINCONNAGE

(84) Benannte Vertragsstaaten:
**AT BE CH CY DE DK ES FI FR GB GR IE IT LI LU MC NL PT SE TR**

(30) Priorität: **25.10.2000 DE 10052955**

(43) Veröffentlichungstag der Anmeldung:
**06.08.2003 Patentblatt 2003/32**

(73) Patentinhaber: **tesa AG**
**20253 Hamburg (DE)**

(72) Erfinder:
- **STORBECK, Reinhard**
  **22457 Hamburg (DE)**
- **BARGMANN, Renke**
  **22527 Hamburg (DE)**
- **HUSEMANN, Marc**
  **22605 Hamburg (DE)**

(56) Entgegenhaltungen:
**WO-A-02/02709** **WO-A-97/23577**
**DE-A- 3 318 600** **US-A- 5 866 249**

- **DATABASE WPI Section Ch, Week 198935 Derwent Publications Ltd., London, GB; Class A14, AN 1989-253446 XP002193748 & JP 01 185383 A (NITTO DENKO CORP), 24. Juli 1989 (1989-07-24)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 332 192 B1

Printed by Jouve, 75001 PARIS (FR)

## Beschreibung

Die Erfindung betrifft die Verwendung von mit anisotropen Haftklebemassen bestrichenen Trägermaterialien zur Herstellung von Stanzprodukten sowie derart erhältliche Stanzprodukte.

Bei der Herstellung von Haftklebemassen wird aus Kosten- und Umweltgründen vermehrt von der Heißschmelz-Technologie (Hotmelt-Technologie) Gebrauch gemacht. Diese Technologie bietet zudem weitere verfahrenstechnische Vorteile.

Heißschmelz-Haftklebemassen (Hotmelts) zeichnen sich durch gute Eigenschaften bezüglich Transparenz und Witterungsbeständigkeit aus. Zudem sind sie in der Lage, hohen Anforderungen im Bereich der Scherfestigkeit gerecht zu werden. Diese Eigenschaften können in günstiger Weise für Polyacrylate mit hohem Molekulargewicht, hoher Polarität und anschließender effektiver Vernetzung erzielt werden.

Alle heute bekannten Haftklebemassen zeichnen sich aber durch ein mehr oder weniger ausgeprägtes Fließverhalten aus. Dieses Fließverhalten ist bei starker Ausprägung auch als kalter Fluß oder als Ausbluten eines Haftklebstoffes bekannt. Das inhärente Verhalten einer Haftklebemasse führt zu Problemen für die Verwendung für gestanzte Materialien; so sind die Lagerzeiten für die gestanzten Materialien begrenzt beziehungsweise werden besondere, in der Regel aufwendige Lagerbedingungen benötigt (beispielsweise eine Klimatisierung der Lagerräume).

WO-A-0 202 709 offenbart die verwendung von Haftklebemassen mit anisotropen Eigenschaften zur Herstellung von Klebebändern.

Materialien können bei der Stanzung angestanzt oder durchgestanzt werden. Herkömmliche Haftklebemasse weisen für die Verwendung für Stanzmaterialien, insbesondere als Schicht aufgetragen auf ein Trägermaterial, in Hinblick auf beide Vorgehensweisen erhebliche Nachteile auf:

> Die durchgestanzten Materialien lassen sich nur kurze Zeit nach dem Stanzvorgang voneinander trennen. Die Haftklebemassen fließen nach dem Stanzvorgang wieder zusammen. Das Zusammenfließen der Haftklebemasse tritt in vielerlei Produktformen auf: Sowohl Transferklebebänder (Haftklebemasse aufgetragen auf einem Trennmaterial), doppelseitig beschichtete Materialien (beidseitige Haftklebemasse auf einem Träger, z.B. auf Folie, Papier, Vlies, Gelege oder Schaum) als auch einseitig beschichtete Materialien (einseitig Haftklebemasse auf einem Träger wie z.B. Folie, Papier, Vlies, Gelege oder Schaum) zeigen den Effekt des Zusammenfließens der Haftklebemasse nach dem Stanzvorgang. Die Stanzlinge können nicht mehr zerstörungsfrei voneinander getrennt werden.
>
> Insbesondere beim Anstanzen tritt, neben dem Zusammenfließen der Haftklebemasse, zusätzlich das nachfolgend beschriebene Problem auf. Beim Anstanzen von selbstklebenden Materialien wird das Trennmaterial mitangestanzt, d.h. die Stanzmesser dringen bis zu einer mehr oder weniger definierten Tiefe in das Substratmaterial (= Trennmaterial) ein. Dadurch wird immer die antiadhäsiv ausgerüstete Oberfläche des Trennmaterials (in den meisten Fällen sind die Trennmaterialien silikonisiert, gilt für alle beschriebenen Trennsysteme, Satas, 3.Auflage, Kapitel 26 und 27) zerstört. Der Kleber kann in das Substratmaterial des Trennmaterials (Papier, PET, PP, PE) hineinfließen und haften. Der Stanzling läßt sich nicht mehr problemlos vom silikonisierten Trennmaterial abziehen, da die Kanten des Stanzlings mit dem Substrat verklebt sind. In einem nachfolgenden Verarbeitungsschritt kann der Stanzling, oder das zu entfernende Matrixgitter um die Stanzlinge herum, beim Abziehen reißen. Diese Abrisse führen zu massiven Produktionsstörungen, da Anstanzprozesse hauptsächlich im kontinuierlichen rotativen Stanzverfahren durchgeführt werden.
>
> Die beschriebenen Effekte gelten für alle Produktaufbauten wie Transferklebebänder sowie für einseitig und beidseitig beschichtete Substrate wie z.B. Folien, Vliese, Papiere, Gelege oder Schäume.

Aufgabe der Erfindung ist es daher, die Herstellung von Stanzprodukten zu verbessem, indem die geschilderten Nachteile des Standes der Technik vermieden oder aber zumindest erheblich vermindert werden.

Gelöst wird die Aufgabe überraschend und für den Fachmann in nicht vorhersehbarer Weise durch die Verwendung anisotroper Haftklebemassen, wie es im Hauptanspruch dargestellt wird. Die Unteransprüche betreffen bevorzugte Weiterentwicklungen dieser Verwendung. Weiterhin betreffen die Ansprüche die derart erhältlichen Stanzlinge.

Demgemäß betrifft der Hauptanspruch die Verwendung einer Haftklebemasse, welche anisotrope Eigenschaften besitzt, zur Herstellung von Stanzprodukten.

Die Haftklebemasse ist dabei bevorzugt ein- oder beidseitig auf ein Trägermaterial auf getragen. Als Trägermaterial sind prinzipiell Folien wie z.B. BOPP oder MOPP, PET, PVC oder Papiere oder Vliese (Basis: Cellulose oder Polymere) geeignet. Weiterhin kommen auch Schäume (z.B. PUR, PE, PE/EVA, EPDM, PP, PE, Silikon, usw.) oder Trennpapiere (Glassine Papiere, Kraft Papiere, polyolefinisch beschichtete Papiere) oder Trennfolien (PET, PP oder PE oder Kombinationen aus diesen Materialien) als Beschichtungssubstrate in Frage.

Während der Herstellung, der Weiterverarbeitung oder der späteren Beanspruchung von Polymeren beziehungsweise von Polymermassen kann es zur Ausbildung hoher Orientierungsgrade der Makromoleküle in bevorzugte Richtungen im gesamten Polymerverband kommen; durch diese Orientierung, die auch gezielt herbeigeführt werden

kann, lassen sich die Eigenschaften der entsprechenden Polymere steuern und in Hinblick auf gewünschte Verwendungen verbessern. Anisotrop orientierte Haftklebemassen besitzen die Tendenz, sich nach einer Streckung in eine vorgegebene Richtung durch das ‚entropieelastische Verhalten in den Ausgangszustand zurückzubewegen.
Für die erfinderische Verwendung sind prinzipiell alle Haftklebemassen geeignet, die eine Orientierung aufweisen, beispielsweise solche auf Basis von Natur- und Synthesekautschuken wie Butylkautschuk, Neopren, Butadien-Acrylnitril, Styrol-Butadien-Styrol- und Styrol-Isopren-Styrol-Copolymerisaten, ferner auf Basis von linearen Polyestern und Copolyestern, Polyurethanen, Polysiloxanelastomeren, auf Basis von Reiacrylaten, ganz besonders aber anisotrope Haftklebemassen auf Polyacrylatbasis.
Solche anisotrop orientierten Acrylathaftklebemasssen zeigen als Schicht nach Stanz- und/oder Schneidvorgängen eine Rückstellung der Haftklebeschicht an der Schneid- und Stanzkante, welche erfinderisch für das Ausstanzen nicht wieder zusammenfließender Stanzformen genutzt wird. Diese Eigenschaft ist für keine der bisher zum Stand der Technik gehörigen Haftklebemassen bekannt.
Eine vorteilhafte Weiterentwickung verwendet in erfinderischem Sinne eine Haftklebemasse,

- welche durch eine radikalische Polymerisation erhältlich ist,
- welche zu mindestens Gew.-65 % auf zumindest einem acrylischen Monomer aus der Gruppe der Verbindungen der folgenden allgemeinen Formel basiert:

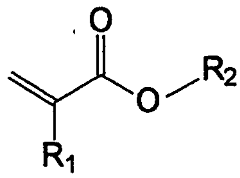

  wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 2 bis 20, bevorzugt mit 4 bis 9 Kohlenstoffatomen,
- bei welcher das mittlere Molekulargewicht der Haftklebemasse mindestens 650.000 beträgt,
- und welche, sofern sie auf einen Träger aufgetragen ist, eine Vorzugsrichtung besitzt, wobei der in Vorzugsrichtung gemessene Brechungsindex $n_{MD}$ größer ist als der in einer Richtung senkrecht zur Vorzugsrichtung gemessene Brechungsindex $n_{CD}$, und wobei die Differenz $\Delta n = n_{MD} - n_{CD}$ mindestens $1 \cdot 10^{-5}$ beträgt.

Die vorstehend geschilderte Haftklebemasse hat sich in besonders günstiger Weise als vorteilhaft für die erfinderische Verwendung erwiesen, so daß in Hinblick auf die gestellte Aufgabe hervorragende Ergebnisse erzielt werden konnten.
Als nicht ausschließliche Beispiele für Alkylgruppe, welche für den Rest $R_2$ in bevorzugter Weise Anwendung finden können, seien im folgenden genannt Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure.
Weiterhin verläuft das Stanzverfahren ausgezeichnet bei erfinderischer Verwendung einer Haftklebemasse, welche zu bis zu 35 Gew.-% auf Comonomere in Form von Vinylverbindungen basiert, insbesondere auf eine oder mehrere Vinylverbindungen gewählt aus der folgenden Gruppe:

Vinylester, Vinylhalogenide, Vinylidenhalogenide, Nitrile ethylenisch ungesättigter Kohlenwasserstoffe.
Im Sinne der erfinderischen Verwendung fallen auch Acrylverbindungen mit funktionellen Gruppen unter die Bezeichnung "Vinylverbindung". Solche funktionelle Gruppen enthaltenden Vinylverbindungen sind Maleinsäureanhydrid, Styrol, Styrol-Verbindungen, Vinylacetat, (Meth)acrylamide, N-substituierte (Meth)acrylamide, β-Acryloyloxypropionsäure, Vinylessigsäure, Fumarsäure, Crotonsäure, Aconitsäure, Dimethylacrylsäure, Trichlor acrylsäure, Itaconsäure, Vinylacetat, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl-(meth)acrylat, und/oder 4-Hydroxybutyl(meth)acrylat und mit Doppelbindung funktionalisierte Photoinitiatoren; die vorstehende Aufzählung ist nur beispielhaft und nicht abschließend.

Für die Haftklebemassen ist es besonders vorteilhaft, wenn die Zusammensetzung der entsprechenden Monomere derart gewählt wird, daß die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen. Hierfür sollte die Glasübergangstemperatur der Acrylathaftklebemasse zum Beispiel unterhalb 25 °C liegen.
Die für die erfinderische Verwendung herangezogenen Haftklebemassen, insbesondere die vorstehend als

vorteilhaft ausgelobten Polyacrylathaftklebemassen, werden bevorzugt durch eine radikalisch initiierte Polymerisation hergestellt. Ein hierfür sehr geeignetes Verfahren zeichnet sich durch die folgenden Schritte aus:

- Polymerisation eines Gemisches enthaltend zumindest ein Monomer auf Vinyl-, Acryl- oder Methacrylbasis oder eine Kombination dieser Monomere, wobei das mittlere Molekulargewicht der entstehenden Polymere oberhalb von 650.000 liegt,
- anschließender Extrusionsbeschichtung der Polymermasse,
- anschließender Vernetzung der Polymermasse auf dem Träger durch Bestrahlung mit Elektronenstrahlen.

Die Extrusionsbeschichtung erfolgt dabei bevorzugt durch eine Extrusionsdüse. Die verwendeten Extrusionsdüsen können aus einer der drei folgenden Kategorien stammen: T-Düse, Fischschwanz-Düse und Bügel-Düse. Die einzelnen Typen unterscheiden sich durch die Gestalt ihres Fließkanals. Zur Herstellung von orientierten Acrylatahftklebemassen wird besonders bevorzugt mit einer Bügeldüse auf einen Träger beschichtet, und zwar derart, daß durch eine Relativbewegung von Düse zu Träger eine Polymerschicht auf dem Träger entsteht.
Die Zeitdauer zwischen der Beschichtung und der Vernetzung ist in günstiger Weise sehr gering, bevorzugt nicht größer als 10 s.
Durch die Ausformung des Acrylathotmelts in der Bügel-Düse sowie den Austritt aus der Düse mit einer bestimmten Filmdicke, durch die Reckung des Haftklebemassenfilms beim Übertrag auf das Trägermaterial auf eine dünnere Filmdicke und durch die anschließende Inline-Vemetzung wird die Orientierung erhalten.

Die freie radikalische Polymerisation kann in Gegenwart eines organischen Lösungsmittels oder in Gegenwart von Wasser oder in Gemischen aus organischen Lösungsmitteln und Wasser oder in Substanz durchgeführt werden. Bevorzugt wird so wenig Lösungsmittel wie möglich eingesetzt. Die Polymerisationszeit beträgt - je nach Umsatz und Temperatur - zwischen 6 und 48 h.
Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wäßrigen Medien bzw. Gemischen aus organischen und wäßrigen Lösungsmitteln werden zur Polymerisation bevorzugt die dem Fachmann zu diesem Zwecke bekannten Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden. Bei der Polymerisation können weitere Regler zur Molekulargewichtssenkung und Verringerung der Polydispersität eingesetzt werden. Als sogenannte Polymerisationsregler können beispielsweise Alkohole und Ether verwendet werden. Das Molekulargewicht der Acrylathaftklebemassen liegt vorteilhaft zwischen 650.000 und 2.000.000 g/mol, mehr bevorzugt zwischen 700.000 und 1.000.000 g/mol.

In einer bevorzugten Vorgehensweise wird die Polymerisation in Polymerisationsreaktoren durchgeführt, die im allgemeinen mit einem Rührer, mehreren Zulaufgefäßen, Rückflußkühler, Heizung und Kühlung versehen sind und für das Arbeiten unter $N_2$-Atmosphäre und Überdruck ausgerüstet sind.

Nach der Polymerisation in Lösemittel kann das Polymerisationsmedium unter vermindertem Druck entfernt werden, wobei dieser Vorgang bei erhöhten Temperaturen, beispielsweise im Bereich von 80 bis 150 °C durchgeführt wird. Die Polymere können dann in lösemittelfreiem Zustand, insbesondere als Schmelzhaftkleber, eingesetzt werden. In manchen Fällen ist es auch von Vorteil, die erfindungsgemäßen Polymere in Substanz herzustellen.

Zur Herstellung der Acrylathaftklebemassen können die Polymere in üblicher Weise modifiziert werden. Beispielsweise können klebrigmachende Harze, wie Terpen-, Terpenphenol-, C5-, C9-, C5/C9- Kohlenwasserstoff-, Pinen-, Inden- oder Kolophoniumharze auch in Kombination miteinander zugesetzt werden. Weiterhin können auch Weichmacher, verschiedene Füllstoffe (z.B. Fasern, Ruß, Zinkoxid, Titandioxid, Mikrovollkugeln, Voll- oder Hohlglaskugeln, Kieselsäure, Silikaten, Kreide, blockierungsfreie Isocyanate etc.), Alterungsschutzmittel, Lichtschutzmittel, Ozonschutzmittel, Fettsäuren, Weichmacher, Keimbildner, Blähmittel und/oder Beschleuniger als Zusätze verwendet werden. Zusätzlich können Vernetzer und Promotoren zur Vernetzung beigemischt werden. Geeignete Vernetzer für die Elektronenstrahlvernetzung sind beispielsweise bi- oder multifunktionelle Acrylate, bi- oder multifunktionelle Isocyanate oder bi- oder multifunktionelle Epoxide.

Die reinen oder abgemischten Acrylathotmelts werden durch eine Düse mit variabler Schlitzbreite auf das Trägermaterial beschichtet und anschließend auf dem Träger mit Elektronenstrahlen gehärtet. Die Vernetzung erfolgt im Inline-Betrieb unmittelbar nach dem Auftragen der Haftklebemasse auf den Träger.

Weiterhin ist Inhalt der Erfindung ein Stanzprodukt aus einem ein- oder beidseitig mit einer anisotropen Haftklebemasse beschichteten Trägermaterial.

Derartige Stanzlinge können als ein- oder doppelseitig klebende Etiketten, zum Verkleben im Haushalt und in der Industrie, besonders im Automobilbau, für alle Montagezwecke, im medizinischen Bereich (Pflaster, Wundabdekkungen) und dergleichen verwendet werden, um nur einige Anwendungsbeispiele zu nennen. Die Stanzlinge sind generell überall dort einsetzbar, wo Klebeetiketten und Klebefolien zur Verwendung kommen. Besonders geeignet sind die

Stanzprodukte dort, wo auf einen sauberen, unbeschädigten Rand des Stanzlings Wert gelegt wird.

Experimente

Die Erfindung wird im folgenden durch Experimente beschrieben, ohne sich durch die Wahl der untersuchten Proben unnötig beschränken zu wollen..

Folgende Testmethoden wurden angewendet, um die anisotropen Eigenschaften der hergestellten Haftklebemassen zu evaluieren.

Testmethoden

180° Klebkrafttest (Test A)

Ein 20 mm breiter Streifen einer auf einer Polyester oder silikonisiertem Trennpapier gecoateten Acrylathaftklebemasse wurde auf Stahlplatten aufgebracht. Es wurde — je nach Richtung und Reckung — Längs oder Quermuster auf der Stahlplatte verklebt. Der Haftklebestreifen wurde zweimal mit einem 2 kg Gewicht auf das Substrat aufgedrückt. Das Klebeband wurde anschließend sofort mit 30 mm/min und im 180° Winkel vom Substrat abgezogen. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten Bedingungen durchgeführt.

Messung der Doppelbrechung (Test B)

Version 1

Ein Spektralphotometer Modell Uvikon 910 wurde im Probenstrahl mit zwei gekreuzten Polaroidfiltern versehen. Orientierte Acrylate wurden zwischen zwei Objekträgem fixiert. Die Schichtdicke der orientierten Probe wurde aus Vorversuchen mittels Dickentaster ermittelt. Die derart vorbereitete Probe wurde im Meßstrahl des Spektralphotometers derart plaziert, daß ihre Orientierungsrichtung um jeweils 45° von den optischen Achsen der beiden Polaroidfilter abwich. Mittels einer zeitaufgelösten Messung wurde dann die Transmission T über die Zeit verfolgt. Aus den Transmissionsdaten wurde dann die Doppelbrechung gemäß folgender Beziehung ermittelt:

$$T = \sin^2(\pi x R) ,$$

wobei R = Retardation.

Die Retardation R setzt sich wie folgt zusammen:

$$R = \frac{d}{\lambda} \Delta n \quad ,$$

wobei d = Probendicke

Die Transmission setzt sich weiterhin aus $T = \frac{I_t}{I_0}$ zusammen. Somit ergibt sich letztendlich für die Doppelbrechung

$$\Delta n = \frac{\lambda}{\pi d} \arcsin \sqrt{T} .$$

Version 2

Die Messung der Doppelbrechung erfolgte mit einem Versuchsaufbau, wie er analog in der Encyclopedia of Polymer Science, John Wiley & Sons, Vol. 10, S. 505, 1987 als Circular-Polariskop beschrieben ist. Das ausgesendete Licht eines diodengepumpten Festkörperlasers mit der Wellenlänge $\lambda$= 532 nm wird zunächst durch ein Polaroidfilter linear polarisiert und dann unter Verwendung einer $\lambda$/4-Platte mit $\lambda$ = 532 nm zirkular polarisiert. Dieser derart polarisierte Laserstrahl wird sodann durch die orientierte Acrylatmasse geführt. Da Acrylatmassen hochtransparent sind, kann der Laserstrahl die Masse praktisch ungehindert passieren. Sind die Polymermoleküle der Acrylatmasse orientiert, so hat dies eine Änderung der Polarisierbarkeit der Acrylatmasse je nach Beobachtungswinkel zur Folge (Doppelbrechung). Der E-Vektor des zirkular polarisierten Laserstrahles erfährt durch diesen Effekt eine Drehung um die Fortschreitungsachse des Laserstrahles. Nach Verlassen der Probe wird der derart manipulierte Laserstrahl durch eine zweite $\lambda$/4-Platte mit $\lambda$ = 532 nm geführt, deren optische Achse um 90° von der optischen Achse der ersten $\lambda$/4-Platte abweicht. Nach diesem Filter schließt sich ein zweiter Polaroidfilter an, der ebenfalls um 90° vom ersten Polaroidfilter abweicht. Schließlich wird die Intensität des Laserstrahles mit einem Photosensor vermessen und $\Delta$n wie unter Version 1 beschrieben bestimmt.

Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert bestimmt.

Messung des Zug-/Dehnungsverhalten (Test D)

Streifen der Muster mit einer Breite von mindestens 30 mm und einer Länge von 50 mm wurden zu einem Probenkörper laminiert, um mindestens eine Dicke von 0,5 mm zu erreichen. Eventuelle Lufteinschlüsse sind dabei weitestgehend vermieden worden. Das erhaltene Laminat wurde auf eine Breite von exakt 20 mm geschnitten und die Streifenenden mit Papier verklebt. Die Länge des Probenstücks zwischen den Papierstreifenenden betrug dabei genau 25 cm. Die Dicke des Streifens wurde anschließend mittels eines Dickentasters auf 10 $\mu$m genau ermittelt.
Der so erhaltene Probenkörper wurde dann unter Zuhilfenahme einer Universalprüfmaschine (Fa. Frank) einer Zug-/Dehnungsmessung unterworfen. Die ermittelten Kräfte wurden jeweils auf den Ausgangsquerschnitt als Spannung angegeben. Die relativen Dehnungen beziehen sich auf die Ausgangslänge von 25 mm. Als Prüfgeschwindigkeiten wurden 100, 300 und 600 mm/min eingestellt.

Messung des Rückschrumpfes (Test E)

Parallel zur Beschichtungsrichtung des Hotmelts wurden Streifen von min. 20 mm Breite und 20 cm Länge geschnitten. Bei Masseaufträgen von 130 g/m$^2$ wurden je 3 Streifen, bei 100 g/m$^2$ wurden je 4 Streifen übereinander laminiert, bei 50 g/m$^2$ 8 Streifen übereinander laminiert, um vergleichbare Schichtdicken zu erhalten. Der derart erhaltene Körper wurde dann auf exakt 20 mm Breite geschnitten und an den jeweiligen Enden in einem Abstand von 15 cm mit Papierstreifen überklebt. Der auf diese Weise präparierte Prüfkörper wurde dann bei RT vertikal aufgehängt und die Änderung der Länge über die Zeit verfolgt, bis keine weitere Schrumpfung der Probe mehr festgestellt werden konnte. Die um den Endwert reduzierte Ausgangslänge wurde dann bezogen auf die Ausganglänge als Rückschrumpf in Prozent angegeben.
Für die Messung der Orientierung nach längerer Zeit wurden die beschichteten und orientierten Haftklebemassen über einen längeren Zeitraum als Lappenmuster gelagert und anschließend analysiert.

Herstellung und Untersuchung der Stanzlinge (Test F)

Es wurden Stanzlinge auf handelsüblichen Flach- oder Rotationsstanzen hergestellt. Für die rotativen Stanzversuche wurden Rotationsstanzzylinder von der Firma Rotometrics - Rotationsstanzwerkzeuge GmbH, Mainz-Kastel, eingesetzt.
Für intermetierendes Stanzen (Flach- oder Hubstanze) wurden Stanzwerkzeuge von der Firma Winck-Stanzwerkzeuge, Neuenhaus eingesetzt.
Der Rückschrumpf der Haftklebemasse wurde mikroskopisch beurteilt und quantitativ vermessen. Als Rückschrumpfstrecke L wurde der Abstand von der Folien- und Trennmaterialstanzkante bis zur rückgestellten Haftklebemassenschicht definiert.

Herstellung der Proben

Beispiel 1

Ein für radikalische Polymerisationen konventioneller 200 L-Reaktor wurde mit 2500 g Acrylsäure, 47,5 kg 2-Ethylhexylacrylat, und 30 kg Aceton/Isopropanol (97:3) befüllt. Nach 45 Minuten Durchleiten mit Stickstoffgas unter Rühren wurde der Reaktor auf 58 °C hochgeheizt und 20 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 20 g AIBN hinzugegeben. Nach 5 h und 10 h wurde mit jeweils 15 kg Aceton/Isopropanol (97:3) verdünnt. Die Reaktion wurde nach 48 h Reaktionszeit abgebrochen und auf Raumtemperatur abgekühlt. Zur Beschichtung aus Lösung auf einen mit Vorstrich versehenen Polyesterträger wurde mit einem Laborstreichbalken auf 130 g/m$^2$ ausgestrichen, für 10 Minuten bei 120 °C im Trockenschrank getrocknet, mit silikonisiertem Trennpapier abgedeckt und letztendlich mit Elektronenstrahlen einer Dosis von 40 kGy und einer Beschleunigungsspannung von 230 kV bestrahlt. Zur Analyse wurden die Testmethoden A, B und C durchgeführt.
Für die Hotmeltbeschichtungen wurde das Lösungsmittel in einem Aufkonzentrationsextruder entfernt.

Beispiel 2

Die Herstellung erfolgte analog Beispiel 1. Zur Polymerisation wurden 5000 g Acrylsäure, 45 kg 2-Ethylhexylacrylat und 30 kg Aceton/Isopropanol (97:3) eingesetzt. Im weiteren Verlauf wurden die identischen Lösungsmittel- und Initiatormengen verwendet. Die Muster wurden mit Elektronenstrahlen einer Dosis von 30 kGy bestrahlt. Zur Analyse wurden die Testmethoden A, B und C durchgeführt.

Beispiel 3

Die Herstellung erfolgte analog Beispiel 1. Zur Polymerisation wurden 3500 g Acrylsäure, 36,5 kg 2-Ethylhexylacrylat, 10 kg Methylacrylat und 30 kg Aceton/Isopropanol (97:3) eingesetzt. Im weiteren Verlauf wurden die identischen Lösungsmittel- und Initiatormengen verwendet. Die Muster wurden mit Elektronenstrahlen einer Dosis von 30 kGy bestrahlt. Zur Analyse wurden die Testmethoden A, B und C durchgeführt.

Beispiel 4

Die Herstellung erfolgte analog Beispiel 1. Zur Polymerisation wurden 3000 g Acrylsäure, 35,5 kg 2-Ethylhexylacrylat, 7,5 kg Methylacrylat, 4 kg N-tert.-Butylacrylamid und 30 kg Aceton/Isopropanol (97:3) eingesetzt. Im weiteren Verlauf wurden die identischen Lösungsmittel- und Initiatormengen verwendet. Die Muster wurden mit Elektronenstrahlen einer Dosis von 30 kGy bestrahlt. Zur Analyse wurden die Testmethoden A, B und C durchgeführt.

Beispiel 5a

Die Herstellung erfolgte analog Beispiel 1. Zur Polymerisation wurden 3500 g Acrylsäure, 20,75 kg 2-Ethylhexylacrylat, 20,75 kg Butylacrylat, 5 kg Methylacrylat, und 30 kg Aceton/Isopropanol (97:3) eingesetzt. Im weiteren Verlauf wurden die identischen Lösungsmittel- und Initiatormengen verwendet. Die Muster wurden mit Elektronenstrahlen einer Dosis von 50 kGy bestrahlt. Zur Analyse wurden die Testmethoden A, B und C durchgeführt.

Beispiel 5b

Die Herstellung erfolgte analog Beispiel 1. Zur Polymerisation wurden 3500 g Acrylsäure, 20,75 kg 2-Ethylhexylacrylat, 20,75 kg Butylacrylat, 5 kg Methylacrylat, und 30 kg Aceton/Isopropanol (97:3) eingesetzt. Zusätzlich wurden 21,5 kg Foral 85 (Fa. Hercules, hydrierter Kolophoniumester) hinzugemischt. Um eine optimale Vernetzung zu erzielen wurden 2 Gewichts% SR 610 (Fa.Sartomer) hinzugemischt. Die Muster wurden mit Elektronenstrahlen einer Dosis von 75 kGy bestrahlt. Zur Analyse wurden die Testmethoden A, B und C durchgeführt.

Beispiel 6 (Reckung der Acrylathotmelts, Muster A-L)

Zur Erzeugung der Muster A - L wurde Beispiel 4 im Trocknungsextruder aufkonzentriert und durch eine Düse mit 300 $\mu$m (Muster A - F) und 780 $\mu$m Spaltbreite (G - L) auf einen silikonisierten Trennpapierträger mit 130 g/m$^2$ beschichtet
Die Bahngeschwindigkeit des Trägers betrug 80 m/min. Für die Muster A - C sowie G - I wurde der Trennpapierträger

mit dem Haftklebefilm über eine Kühlwalze mit 25 °C geführt. Bei den Mustern D - F sowie J - L wurde diese Walze auf 90 °C hochgeheizt. Zur Untersuchung des Relaxationsverhaltens wurden die Muster A, D, G und J sofort nach der Beschichtung im Inline-Prozess mit Elektronenstrahlen einer Dosis von 30 kGy und einer Beschleunigungsspannung von 230 kV ESH vemetzt. Die Muster B, E, H, und K wurden nach der Beschichtung für eine Stunde bei Raumtemperatur gelagert und anschließend mit identischen Verfahrensparametem elektronenstrahlvernetzt. Die Muster C, F, I, und L wurden nach der Beschichtung für 48 Stunden bei Raumtemperatur gelagert und anschließend mit identischen Verfahrensparametem elektronenstrahlvemetzt. Zur Analyse wurden von allen Mustern die Testmethoden A, B und C durchgeführt.

Beispiel 7 (Muster 1#)

Es wurde analog Beispiel 6 vorgegangen. Als Haftklebemasse wurde Beispiel 1 eingesetzt. Die Beschichtung erfolgt durch eine 300 μm breite Düse mit 130 g/m$^2$ Masseauftrag, einer Chillrolltemperatur von 25 °C (Außentemperatur der Stahlwalze, auf der das Trägermaterial beschichtet wird) der und einer Bahngeschwindigkeit von 80 m/min. Es wurde mit Elektronenstrahlen einer Dosis von 40 kGy vemetzt und zur Analyse die Testmethoden A, B, C, D und E durchgeführt.

Beispiel 8 (Muster 2#)

Es wurde analog Beispiel 6 vorgegangen. Als Haftklebemasse wurde Beispiel 2 eingesetzt. Die Beschichtung erfolgt durch eine 300 μm breite Düse mit 130 g/m$^2$ Masseauf trag, einer Chillrolltemperatur von 25 °C und einer Bahngeschwindigkeit von 80 m/min. Es wurde mit Elektronenstrahlen einer Dosis von 30 kGy vemetzt und zur Analyse die Testmethoden A, B, C, D und E durchgeführt.

Beispiel 9 (Muster 3#)

Es wurde analog Beispiel 6 vorgegangen. Als Haftklebemasse wurde Beispiel 3 eingesetzt. Die Beschichtung erfolgt durch eine 300 μm breite Düse mit 130 g/m$^2$ Masseauftrag, einer Chillrolltemperatur von 25 °C und einer Bahngeschwindigkeit von 80 m/min.

Es wurde mit Elektronenstrahlen einer Dosis von 30 kGy vernetzt und zur Analyse die Testmethoden A, B, C, D und E durchgeführt.

Beispiel 10 (Muster 5#)

Es wurde analog Beispiel 6 vorgegangen. Als Haftklebemasse wurde Beispiel 5 eingesetzt. Die Beschichtung erfolgt durch eine 300 μm breite Düse mit 130 g/m$^2$ Masseauftrag, einer Chillrolltemperatur von 25 °C und einer Bahngeschwindigkeit von 80 m/min. Es wurde mit Elektronenstrahlen einer Dosis von 50 kGy vemetzt und zur Analyse die Testmethoden A, B, C, D und E durchgeführt.

Beispiel 11 (Muster 6#)

Es wurde analog Beispiel 6 vorgegangen. Als Haftklebemasse wurde Beispiel 4 eingesetzt. Die Beschichtung erfolgt durch eine 300 μm breite Düse mit jeweils 100 g/m$^2$ Masseauftrag beidseitig auf eine 12 μm dicke PET-Folie. Die Beschichtung erfolgte in 2 Arbeitsgängen. Die Chillrolltemperatur betrug 25 °C, die Bahngeschwindigkeit betrug 80 m/min. Es wurde mit Elektronenstrahlen einer Dosis von 50 kGy vemetzt und zur Analyse die Testmethoden A, B, C, D und E durchgeführt.

Beispiel 12 (Muster 7#)

Es wurde analog Beispiel 6 vorgegangen. Als Haftklebemasse wurde Beispiel 5b eingesetzt. Die Beschichtung erfolgt durch eine 300 μm breite Düse mit jeweils 100 g/m$^2$ Masseauftrag beidseitig auf eine 12 μm dicke PET-Folie. Die Beschichtung erfolgte in 2 Arbeitsgängen. Die Chillrolltemperatur betrug 25 °C, die Bahngeschwindigkeit betrug 80 m/min. Es wurde mit Elektronenstrahlen einer Dosis von 75 kGy vemetzt und zur Analyse die Testmethoden A, B, C, D und E durchgeführt.

Beispiel 13 (Muster 8#)

Es wurde analog Beispiel 6 vorgegangen. Als Haftklebemasse wurde Beispiel 5b eingesetzt. Die Beschichtung erfolgt durch eine 300 μm breite Düse mit jeweils 100 g/m$^2$ Masseauftrag beidseitig auf eine 50 μm dicke BOPP-Folie.

Die Beschichtung erfolgte in 2 Arbeitsgängen. Die Chillrolltemperatur betrug 25 °C, die Bahngeschwindigkeit betrug 80 m/min. Es wurde mit Elektronenstrahlen einer Dosis von 75 kGy vemetzt und zur Analyse die Testmethoden A, B, C, D und E durchgeführt.

Beispiel 14 (Muster 9#)

Es wurde analog Beispiel 6 vorgegangen. Als Haftklebemasse wurde Beispiel 5b eingesetzt. Die Beschichtung erfolgt durch eine 300 μm breite Düse mit jeweils 100 g/m$^2$ Masseauftrag beidseitig auf eine 50 μm dicke BOPP-Folie. Die BOPP Folie wurde direkt vor der Beschichtung beidseitig inline Corona vorbehandelt. Die Oberflächenspannung betrug danach < 45 mN/m. Die Beschichtung erfolgte in 2 Arbeitsgängen. Die Chillrolltemperatur betrug 25 °C, die Bahngeschwindigkeit betrug 80 m/min. Es wurde mit Elektronenstrahlen einer Dosis von 75 kGy vemetzt und zur Analyse die Testmethoden A, B, C, D und E durchgeführt.

Resultate

Zur Untersuchung der Orientierung von Acrylathaftklebemassen und deren Vernetzbar keit wurden zunächst verschiedene Acrylathaftklebemassen über freie radikalische Polymerisation hergestellt. Alle Klebemassen sind bezüglich Temperaturstabilität und Fließviskosität im Hotmelt-Prozess verarbeitbar. Die dargestellten Acrylathaftklebemassen wurden in Lösung polymerisiert und anschließend im Trocknungsextruder aufkonzentriert. Die Comonomerzusammensetzung der einzelnen Klebemassen ist in Tabelle 1 aufgelistet.

Tabelle 1: Comonomerzusammensetzung der einzelnen Acrylathaftklebemassen

| Tabelle 1 | | | | | |
|---|---|---|---|---|---|
| Beispiel | 2-EHA | BA | MA | NTBAM | AS |
| 1 | 95 | 0 | 0 | 0 | 5 |
| 2 | 90 | 0 | 0 | 0 | 10 |
| 3 | 73 | 0 | 20 | 0 | 7 |
| 4 | 71 | 0 | 15 | 8 | 6 |
| 5 a/ b | 41,5 | 41,5 | 10 | 0 | 7 |
| 2-EHA: 2-Ethylhexylacrylat<br>BA: Butylacrylat<br>MA: Methylacrylat<br>NTBAM: N-tert.-Butylacrylamid<br>AS: Acrylsäure | | | | | |

Das mittlere Molekulargewicht der Beispiele 1 - 5a/5b betrug etwa 800.000 g/mol. Als Referenzmuster wurden die Beispiele 1 - 5a/5b aus Lösung auf eine mit einem Vorstrich (Primer) versehende Polyesterfolie mit 130 g/m$^2$ aufgetragen, bei 120 °C getrocknet, mit Elektronenstrahlung gehärtet und anschließend klebtechnisch ausgeprüft. Zur Beurteilung der Effizienz der Vernetzung wurde der Gelwert der Klebemassen gemessen. Der Gelwert gibt den unlöslichen Anteil der Haftklebemasse in Toluol wider. Femer wurden die Sofortklebkräfte auf Stahl gemessen. Die Ergebnisse der Ausprüfungen sind in Tabelle 2 dargestellt.

Tabelle 2: Klebtechnische Ausprüfung der Referenzmuster

| Beispiel | Elektronenstrahl -Dosis [kGy] | Gelwert [%] | KK-Stahl [N/cm] |
|---|---|---|---|
| 1 | 40 | 65 | 6,5 |
| 2 | 30 | 55 | 6,0 |
| 3 | 30 | 56 | 5,9 |
| 4 | 30 | 59 | 6,1 |
| 5 a | 50 | 72 | 6,5 |

Tabelle fortgesetzt

| Beispiel | Elektronenstrahl -Dosis [kGy] | Gelwert [%] | KK-Stahl [N/cm] |
|---|---|---|---|
| 5 b | 75 | 67 | 9,5 |
| KK: Klebkraft auf Stahl | | | |

Die Gelwerte variieren - je nach Comonomerzusammensetzung und Dosis zwischen 55 und 72 %.
Durch den relativ hohen Anteil polarer Monomere sind die harzfreien Klebemassen kohäsiv und besitzen daher relativ geringe Sofortklebkräfte auf Stahl von etwa 6 - 6,5 N/cm. Messungen in Quer- sowie Längsrichtung ergaben im Rahmen der Meßfehler nahezu die identischen Klebkräfte. Die Messung der Doppelbrechung zeigte keine Orientierung innerhalb der Klebemassen. Es wurden keine unterschiedlichen Polarisierbarkeiten in Längs- und Querrichtung festgestellt.
Zur Untersuchung des Orientierungseffektes wurden die Beispiele 1 - 5a/b im Trocknungsextruder zu 100%-Systemen aufkonzentriert und durch eine Düse mit unterschiedlicher Schlitzbreite beschichtet.

Zur Herstellung orientierter Acrylathotmelts wurde die Haftklebemasse durch den Fließvorgang innerhalb der Düse vororientiert. Anschließend wird der Klebefilm auf das Trägermaterial mit einer bestimmten Schichtdicke übertragen. Zur Einstellung der Schichtdicke ist ein bestimmtes Reckverhältnis zwischen Düsenbreite und Schichtdicke erforderlich. Dieser Effekt kann durch Erhöhung der Beschichtungsgeschwindigkeit (Bahngeschwindigkeit des aufnehmenden Trägermaterials) verstärkt werden. Durch das Verhältnis von Düsenspaltbreite und Schichtdicke der Klebemasse auf dem Trägermaterial kann das Maß der Orientierung der Polymerketten frei variiert werden.
Zur experimentellen Bestätigung wurden die Klebemassen mit unterschiedlichen Reckverhältnissen und weiteren Versuchsparametem beschichtet. Zur Minimierung der Relaxationszeit wurden die Haftklebemasse nach der Beschichtung im Inline-Prozess mit Elektronenstrahlen vemetzt. Die Relaxationszeiten lagen somit deutlich unterhalb 10 s. Ergänzende Versuche haben gezeigt, daß nach 48 h noch Orientierungen nachweisbar sind. Diese Experimente wurden mit Beispiel 4 durchgeführt und das optimale Reckverhältnis, die optimale Temperatur der Beschichtungswalze und der Zeitpunkt der Inline-Vernetzung ermittelt. Die Experimente sind in Tabelle 3 zusammengefaßt.

Tabelle 3: Versuchsparameter zur Orientierung der Klebemasse 4

| Muster | Reckverhältnis | Temperatur der Walze [°C] | Zeitpunkt der Vernetzung | Δn-Werte |
|---|---|---|---|---|
| A B C | 1:2,3 | 25 | 2s | $9{,}3 \cdot 10^{-5}$ |
| | | | 1 h | $4{,}2 \cdot 10^{-5}$ |
| | | | 48 h | $6{,}6 \cdot 10^{-6}$ |
| D E F | | 90 | 2s | $3{,}4 \cdot 10^{-5}$ |
| | | | 1 h | $7{,}8 \cdot 10^{-6}$ |
| | | | 48 h | - |
| G H I | 1:6 | 25 | 2 s | $1{,}0 \cdot 10^{-4}$ |
| | | | 1 h | $5.6 \cdot 10^{-5}$ |
| | | | 48 h | $8.3 \cdot 10^{-6}$ |
| J K L | | 90 | 2 s | $7{,}4 \cdot 10^{-5}$ |
| | | | 1 h | $9{,}7 \cdot 10^{-6}$ |
| | | | 48 h | - |
| Δn-Werte: Differenz der Brechungsindizes $n_{MD}$ in Richtung der Verstreckung und $n_{CD}$ senkrecht hierzu. | | | | |

Das Reckverhältnis wurde durch Variation der Düsenbreite eingestellt. Der Masseauftrag blieb konstant bei 130 g/m$^2$. Die Muster wurden jeweils mit einer Elektronenstrahl-Dosis von 30 kGy bestrahlt. Alle gereckten Muster sind alphabetisch aufgelistet.
Die Orientierung innerhalb der Acrylathaftklebemassen wurde durch Quantifizierung der Doppelbrechung bestimmt. Der Brechungsindex n eines Mediums ist gegeben über den Quotienten aus der Lichtgeschwindigkeit $c_0$ im Vakuum und der Lichtgeschwindigkeit c in dem betrachteten Medium ($n = c_0/c$), n ist eine Funktion der Wellenlänge des jeweiligen Lichts. Als Maß für die Orientierung der Haftklebemasse dient die Differenz Δn des in eine Vorzugsrichtung (Verstrek-

kungsrichtung, machine direction MD) gemessenen Brechungsindex $n_{MD}$ und des in einer Richtung senkrecht zur Vorzugsrichtung (cross direction CD) gemessenen Brechungsindex $n_{CD}$, also $\Delta n = n_{MD} - n_{CD}$, dieser Wert ist durch die in Test B beschriebenen Messungen zugänglich.
Alle Muster zeigten eine Orientierung der Polymerketten. Die ermittelten Δn-Werte sind in Tabelle 3 aufgelistet, wobei die größte Orientierung für das Muster G gemessen wurde (An = $1{,}0 \cdot 10^{-4}$). Für das weniger stark gereckte Muster A wurde ein An-Wert von $9{,}3 \cdot 10^{-5}$ bestimmt.
Der entsprechende Δn-Wert ist abhängig von der Comonomerzusammensetzung und dem Verzweigungsgrad des Polymers. Für die hier dargestellten Polymere ist die Haftklebemasse erfindungsgemäß orientiert, wenn der An-Wert > $1 \cdot 10^{-5}$ beträgt.
Die Orientierung innerhalb der Acrylathaftklebemassen in dem oben angegebenen Grad konnte somit durch die Doppelbrechungsmessung für die vermessenen Proben nachgewiesen werden.

Die Auswirkungen auf die klebtechnischen Eigenschaften sind in Tabelle 4 dargestellt:

Tabelle 4

| Muster | Gelwert [%] | KK-Stahl MD [N/cm] | KK-Stahl CD [N/cm] |
|---|---|---|---|
| A | 61 | 5,2 | 6,7 |
| B | 59 | 5,8 | 6,4 |
| C | 59 | 6,1 | 6,2 |
| D | 59 | 6,3 | 6,6 |
| E | 60 | 6,0 | 6,4 |
| F | 56 | 6,1 | 6,0 |
| G | 63 | 4,9 | 6,9 |
| H | 62 | 5,9 | 6,5 |
| 1 | 60 | 6,0 | 6,1 |
| J | 62 | 5,8 | 6,7 |
| K | 59 | 5,9 | 6,4 |
| L | 58 | 6,0 | 6,0 |

Masseauftrag 130 g/$m^2$
KK: Klebkraft auf Stahl;
MD (maschine direction; Verstreckungsrichtung); CD (cross direction, Querrichtung)

Für die Muster A und G wurden bezugnehmend auf die Klebkräfte für MD (maschine direction; Verstreckungsrichtung (Längsrichtung, in der die Haftklebemasse gereckt wurde)) und für CD (cross direction, Querrichtung, senkrecht auf MD) nur relativ geringe Unterschiede in der Klebkraft gemessen, wobei für MD jeweils die niedrigen Werte gemessen wurden. Auch die Gelwerte nach der Elektronenstrahl-Vernetzung schwanken relativ wenig mit dem Grad der Orientierung. Die stärksten Orientierungen wurden mit kurzer Relaxationszeit und kalter Beschichtungsrolle erzielt.

Um die universelle Übertragbarkeit zu gewährleisten und zur Untersuchung des Rückstelleffektes bei selbstklebenden Stanzlingen, wurden weitere Acrylathotmelts mit unterschiedlichen Comonomerzusammensetzungen aus der Schmelze beschichtet.

Die Ergebnisse der klebtechnischen Ausprüfung sind in Tabelle 5 dargestellt.

Tabelle 5

| Muster | Elektronenstrahl-Dosis [kGy] | Gelwert [%] | KK-Stahl MD [N/cm] | KK-Stahl CD [N/cm] | An-Werte |
|---|---|---|---|---|---|
| 1# | 40 | 72 | 5,8 | 6,8 | $1{,}5 \cdot 10^{-4}$ |
| 2# | 30 | 62 | 5,7 | 6,4 | $0{,}8 \cdot 10^{-4}$ |
| 3# | 30 | 61 | 5,5 | 6,2 | $1{,}2 \cdot 10^{-4}$ |
| 5# | 50 | 75 | 5,9 | 6,7 | $0{,}6 \cdot 10^{-4}$ |

Tabelle fortgesetzt

| Tabelle 5 | | | | | |
|---|---|---|---|---|---|
| Muster | Elektronenstrahl-Dosis [kGy] | Gelwert [%] | KK-Stahl MD [N/cm] | KK-Stahl CD [N/cm] | An-Werte |
| 6# | 50 | 73 | 9,6 | 9,8 | $0{,}5 \cdot 10^{-4}$ |
| 7# | 75 | 65 | 11,4 | 11,6 | $0{,}5 \cdot 10^{-4}$ |
| 8# | 75 | 64 | 13,5 | 14,1 | $0{,}6 \cdot 10^{-4}$ |
| 9# | 75 | 64 | 13,2 | 13,8 | $0{,}6 \cdot 10^{-4}$ |
| Masseauftrag 130 g/m$^2$ (Muster 1#, 2#, 3#, 5#)<br>Masseauftrag 2 x 100g/m$^2$ auf PET, Dicke 12 $\mu$m (Muster 6#, 7#)<br>Masseauftrag 2 x 100g/m$^2$ auf BOPP, Dicke 50 $\mu$m (Muster 8#, 9#)<br>Gelwerte sind immer auf die vernetzte Reinacrylatmenge bezogen<br>KK: Klebkraft auf Stahl;<br>MD (maschine direction; Verstreckungsrichtung); CD (cross direction, Querrichtung)<br>$\Delta$n-Werte: Differenz der Brechungsindizes $n_{MD}$ in Verstreckungsrichtung und $n_{CD}$ senkrecht hierzu. | | | | | |

Die Ausprüfungen der gereckten Muster zeigen, daß generell Acrylathaftklebemassen mit anisotropen Klebeeigenschaften erzeugt werden können, indem die Haftklebemasse in einer Extrusionsdüse ausgeformt wird, bei der Beschichtung stark gereckt wird und dieser Zustand anschließend mit Elektronenbestrahlung "eingefroren" wird. Die für Muster 1# bis 9# ermittelten An-Werte liegen in etwa auf dem Niveau desjenigen von Muster G. Für die Muster 1#, 2#, 3# und 5# bis 9# wurden nur relativ geringe Unterschiede in den Klebkräften für Längs- und Querrichtung gemessen. Wiederum werden in Verstreckungsrichtung (MD) niedrigere Klebkräfte gemessen.
Dagegen zeigen Zug/Dehnmessungen einen deutlichen Einfluß der Orientierung auf die physikalischen Eigenschaften der Haftklebemassen. In Abbildung 1 und 2 sind die Zug/Dehn-Diagramme der Muster 1#, 2#, 3# und 5# dargestellt. Die Muster 1#, 2#, 3# und 5# zeigen nach der Orientierung in Verstreckungsrichtung (MD) eine bedeutend geringere Dehnung. Die Spannung steigt bereits auf einer sehr kurzen Strecke schnell an und die Muster reißen. In der Querrichtung (CD) lassen sich Beispiele mit weit über 1000 % Dehnung weiter strecken und sind in dieser Richtung bedeutend weniger reißfest.

Für die vorteilhafte Anwendung der orientierten Haftklebemassen im Stanzbereich ist der Rückschrumpf ein entscheidender Faktor. Orientierte Klebemassen besitzen die Tendenz, sich nach der Streckung in eine vorgegebene Richtung durch das ‚entropieelastische Verhalten' in den Ausgangszustand zurückzubewegen. Zur analytischen Fassung dieser Problematik wurde der Rückschrumpf der orientierten Muster im freien Film bestimmt.
Die bei Raumtemperatur ermittelten Werte sind in Tabelle 6 aufgelistet:

| Tabelle 6 | |
|---|---|
| Muster | Rückschrumpf [%] |
| 1# | 91 |
| 2# | 95 |
| 3# | 93 |
| 5# | 90 |
| 6# | 85 |
| 7# | 65 |
| 8# | 64 |
| 9# | 63 |
| - Muster 1#, 2#,3#,5#: Masseauftrag 130 g/m$^{-2}$ - Muster 6# bis 9# Masseauftrag 100 g/m$^2$ | |

Die Werte wurden jeweils nach 1 Woche Lagerung ermittelt. Weiterhin verdeutlicht der starke Rückschrumpf aller orientierten Muster das Bestreben der Haftklebemasse, wieder in den ursprünglichen Zustand zurückzukehren. Durch die Elektronenstrahl-Vernetzung kann die Orientierung eingefroren werden. Alle Muster aus Tabelle 6 wurden in Tabelle 7 mit den dargestellten Elektronenstrahl-Dosen vemetzt, um dann nach 2-monatiger Lagerung wiederum den Rückschrumpf dieser Haftklebemassen zu ermitteln.

Tabelle 7

| Muster | Elektronenstrahl-Dosis [kGy] | Rückschrumpf [%] |
|---|---|---|
| 1# | 40 | 89 |
| 1# | 0 | -25 |
| 2# | 30 | 94 |
| 2# | 0 | -5 |
| 3# | 30 | 92 |
| 3# | 0 | 0 |
| 5# | 50 | 90 |
| 5# | 0 | -8 |
| 6# | 50 | 83 |
| 6# | 0 | -8 |
| 7# | 75 | 59 |
| 7# | 0 | - 35 |
| 8# | 75 | 57 |
| 8# | 0 | - 45 |
| 9# | 75 | 61 |
| 9# | 0 | -48 |

- Muster 1#, 2#,3#,5#: Masseauftrag 130 g/m$^2$
- Muster 6# bis 9# Masseauftrag 100 g/m$^2$

Tabelle 7 belegt, daß durch die Elektronenstrahl-Vernetzung die Orientierung eingefroren werden und auch nach 2-monatiger Lagerung durch den Rückschrumpf für Produktanwendungen genutzt werden kann. Der Vergleich mit den jeweils unvemetzten Mustern verdeutlicht, daß die Haftklebemassen ohne Vernetzung relaxieren und somit der Rückschrumpf nicht mehr existent ist. Hier ist im Gegenteil bei einigen Proben sogar eine Ausdehnung der Proben während der Messung zu beobachten, welche auf die auf die aufgehängten Proben einwirkende Schwerkraft zurückzuführen ist. Die harzabgemischten Haftklebemassen zeigen ein ausgeprägtes Fließverhalten.

Zur Beurteilung des Rückstellverhaltens der Haftklebemasse im Stanzling wurde aus den Mustern 5# bis 9# durch rotatives Stanzen ein Stanzling hergestellt. Abbildung 3a zeigt die Stanzlingform, wobei der Pfeil die Verstreckungsrichtung angibt. Das Rückstellverhalten wurde an der Oberkante (Stanzkante verläuft parallel zur Verstreckungsrichtung) sowie an den Stegen (Stanzkante verläuft quer zur Verstreckungsrichtung) mikroskopisch untersucht. In Abbildung 3b sind die Rückschrumpfmeßstellen dargestellt, in Abbildung 3c in Vergrößerung die mikroskopille Aufnahme zur Beurteilung der Oberkante der Probe (quer zur Verstreckungsrichtung) und in Abbildung 3d diejenige zur Beurteilung des Steges (längs zur Verstreckungsrichtung).

In Tabelle 8 wird der beobachtete Rückschrumpf der Haftklebemasse in Abhängigkeit von der Zeit nach der Stanzung protokolliert.

| Tabelle 8 | | | | |
|---|---|---|---|---|
| | Rückschrumpfstrecke L (μm) Distanz der rückgestellte Haftklebemasse zur Folien/ Trennmaterialstanzkante | | | |
| Muster | Oberkante Rückstelllänge L nach 24 h, RT | Oberkante Rückstelllänge L nach 1 Woche,RT | Steg Rücksteillänge L nach 24 h, RT | Steg Rückstelllänge L nach 1 Woche, RT |
| 5# | 5 | 4 | 350 | 290 |
| 6# | 3 | 3 | 180 | 171 |
| 7# | 4 | 4 | 105 | 102 |
| 8# | 3 | 4 | 95 | 92 |
| 9# | 2 | 3 | 30 | 28 |

Bevorzugt besitzen die Haftklebemasssen für die erfinderische Verwendung ein Rückstellverhalten von 20 bis 800 μm, insbesondere von 30 bis 100 μm, gemessen in Verstreckungsrichtung.

Durch Temperaturanwendung läßt sich die Rückstellung deutlich beschleunigen. Man erreicht schon nach kurzer Zeit einen nahezu konstanten Endwert.

In Tabelle 9 wurde der Rückschrumpf einiger Muster in Abhängigkeit von der Temperatur und der Zeit gemessen.

| Tabelle 9 | | |
|---|---|---|
| Muster | Zeit [h]/Temperatur [°C] | Rückschrumpf [%] |
| 1# | 2/40 | 72 |
| 1# | 2/60 | 78 |
| 2# | 3/40 | 76 |
| 2# | 3/60 | 81 |
| 3# | 2/40 | 70 |
| 3# | 3/60 | 82 |
| 5# | 2/40 | 73 |
| 5# | 2/60 | 80 |
| Masseauftrag 130 g/m$^2$ | | |

Durch die Temperaturbehandlung wird der Rückschrumpf wesentlich beschleunigt. Die Muster erreichen bei einer Temperierung von 60 °C schon nach relativ kurzer Zeit (3 h) einen Rückschrumpf von über 80 % und damit nahezu einen Wert, der sonst erst bei Lagerung von mehreren Tagen erzielt wird.

Die Proben der in Form von Schichten vorliegenden anisotrop orientierten Acrylathaftklebemassen zeigen nach Stanz- und Schneidvorgängen eine Rückstellung der Haftklebeschicht, die ein Zusammenfließen der Haftklebemassen verhindert.

In Abbildung 4 a ist der Schneidevorgang mit einem Stanzmesser 1 durch ein Transferklebeband mit einer einseitig aufgetragenen nicht anisotropen Haftkleberschicht 21 dargestellt, Abbildung 4b zeigt die erfinderische Verwendung einer anisotropen Haftklebemasse 22 für den Stanzvorgang, nämlich für die Stanzung eines Transferklebebandes mit einer anisotropen Haftklebemasse 22. Die Ziffer 3 bezeichnet ein antiadhäsives Trennmaterial, z.B. silikonisiertes Trennpapier. Im ersten Fall (Abbildung 4a, nicht anisotrope Haftklebemasse) fließt nach dem Schneidevorgang und dem Entfemen des Messers 1 der Haftkleber des Stanzling mit der Haftklebeschicht der umgebenden Schicht zusammen, die zusammengeflossenen Haftklebemasse wird durch 4 bezeichnet. Eine Entfernung des Stanzlings ist nicht, oder nicht zerstörungsfrei, möglich. So ist der Stanzling in diesen Fällen am Rande ausgefranst, und die Haftklebemasse zieht Fäden.

Bei einem Stanzverfahren mit erfinderischer Verwendung der anisotropen Haftklebemasse 22 (Abbildung 4b) zieht sich die Haftklebeschicht nach dem Schnitt zurück (Rückschrumpf, Ziffer 7). Der Stanzling kann unbeschädigt vom Trennmaterial 3 abgezogen und mit sauberer Schnittkante auf einen Untergrund aufgeklebt werden.

Die Abbildungen 5a und 5b zeigt das Verhalten nach dem Schneidevorgang für doppelseitige Klebebänder (Aufgebaut aus Haftkleberschicht 21 bzw. 22, Träger 5 (Folie, Vlies oder dergleichen), Haftkleberschicht 21 bzw. 22, antiadhäsivem Trennmaterial 3). Abbildung 5a zeigt den Fall nicht anisotroper Haftklebemasse 21 auf einer Trennschicht 3: Nach dem Schneidevorgang (Position 4) fließt die Klebemasse 21 zusammen (Ziffer 4). Bei dem Abziehen des Stanzlings vom Trennmaterial 3 wird der Stanzling beschädigt.

Abbildung 5b zeigt denselben Schneidevorgang bei Verwendung anisotroper Haftklebemassen 22: Nach dem Schnitt mit dem Messser 1 zieht sich die Haftklebemasse 22 entsprechend des Rückschrumpfes 7 zurück, ein Zusammenfließen der Haftklebemasse des Stanzlings und des umgebenden Materials wird verhindert.

Entsprechend zeigen die Abbildungen 6a und 6b den herkömmlichen (6a, nicht anisotrope Klebemasse 21, Zusammenfließen 4 nach dem Schneidevorgang) und den erfinderischen (6b, anisotrope Klebemasse 22, kein Zusammenfließen 7) Stanzvorgang für die Anstanzung von Transferklebebändern mit einseitiger Haftklebeschicht 21 bzw. 22. Befindet sich zwischen zwei Schichten Trennmaterial 6 eine Trennschicht 3, so kann der Stanzling nun abgehoben werden und besitzt unversehrte Ränder. Die Abbildungen 7a und 7b zeigen demgemäß die Anstanzung von doppelseitigen Klebebändern auf Trennmaterial 3. (Abbildung 7a: nicht anisotrope Haftklebemasse 21, fließt nach dem Anstanzen wieder zusammen 4; Abbildung 7b, anisotrope Haftklebmasse 22, kein Zusammenfließen nach der Stanzung (Rückschrumpf 7), Schnitt bleibt erhalten).

Die Rückstellung ist besonders ausgeprägt in Verstreckungsrichtung (MD). Vorteilhafter weise werden Schnitte daher derart angebracht, daß der Winkel zwischen der Verstreckungsrichtung und dem Schnitt in einem Winkelbereich zwischen 0° (paralleler Verlauf) und 90° möglichst groß gewählt wird, wobei der Winkel bevorzugt 90° beträgt, der Schnitt also senkrecht zur Verstreckungsrichtung (somit in Querrichtung, CD) verläuft.

Auch bei Schnitten in Verstreckungsrichtung kann aber ein deutlich reduziertes Fließverhalten, verglichen mit nicht anisotropen Haftklebemassen, festgestellt werden.

Das Rückstellverhalten der Haftklebeschicht bei Ein- oder Durchschnitten kann bei einseitig oder doppelseitig beschichteten Trägermaterialien auch über die Verankerung der Haftklebeschicht auf dem Trägermaterial gezielt beeinflußt werden. Mit einer Corona- oder Flammvorbehandlung konnte auf BOPP- und PET-Trägerfolien eine deutliche Reduktion des Rückschrumpfes erreicht werden.

Entscheidende Parameter bei der Einstellung des Rückschrumpfverhaltens sind die Prozeßbedingungen der Extrusion. Hierzu zählen besonders die Temperatur der Beschichtungswalze, die Temperatur der Haftklebmassse während der Verarbeitung, die Zeit bis zur Vernetzung, das Verstreckungsverhältnis bei der Beschichtung und die Beschichtungsgeschwindigkeit.

Das Rückstellverhalten der Haftklebeschicht konnte sowohl bei harzfreien Acrylathotmelts wie auch bei harzabgemischten Acrylathotmelts beobachtet werden. Die Erfindung ist insbesondere für harzabgemischte Acrylathotmelts bedeutend, da diese Systeme auf grund ihrer inhärenten geringeren Viskosität, im Vergleich zu Reinacrylaten, ein deutlich ausgeprägteres Fließverhalten aufweisen als Reinacrylate.

Auf diese Art lassen sich die positiven Eigenschaften von Hotmelthaftklebmassen für die Verwendung in Stanzprodukten nutzen, ohne daß sich das stärkere Fließverhalten nachteilig auf den Stanzvorgang oder die hergestellten Stanzprodukte auswirkt.

## Patentansprüche

1. Verwendung einer Haftklebemasse, welche anisotrope Eigenschaften besitzt, für die Herstellung von Stanzprodukten.

2. Verwendung nach Anspruch 1, **dadurch gekennzeichnet, daß** die Haftklebemasse ein- oder beidseitig auf ein Trägermaterial aufgetragen ist.

3. Verwendung nach Anspruch 1, **dadurch gekennzeichnet, daß**
die Haftklebemasse eine solche auf Polyacrylatbasis ist.

4. Verwendung nach Anspruch 1, **dadurch gekennzeichnet, daß**
die Haftklebemasse eine solche auf Basis von Natur- und Synthesekautschuken wie Butylkautschuk, Neopren, Butadien-Acrylnitril, Styrol-Butadien-Styrol- und Styrol-Isopren-Styrol-Copolymerisaten ist.

5. Verwendung nach Anspruch 1, **dadurch gekennzeichnet, daß**
die Haftklebemasse eine solche auf Basis von linearen Polyestern, Copolyestern, Polyurethanen oder Polysiloxanelastomeren ist.

6. Verwendung nach zumindest einem der vorangehenden Ansprüche, **dadurch gekennzeichnet, daß** die Haftklebemasse zu bis zu 35 Gew.-% auf Comonomere in Form von Vinylverbindungen basiert, insbesondere auf eine oder mehrere Vinylverbindungen gewählt aus der folgenden Gruppe:

Vinylester, Vinylhalogenide, Vinylidenhalogenide, Nitrile ethylenisch ungesättigter Kohlenwasserstoffe.

## Revendications

1. Utilisation d'une masse auto-adhésive qui présente des propriétés anisotropes pour la réalisation de produits découpés.

2. Utilisation selon la revendication 1, **caractérisée en ce que** la masse auto-adhésive est appliquée en simple face ou double face sur un matériau support.

3. Utilisation selon la revendication 1, **caractérisée en ce que** la masse auto-adhésive est une masse auto-adhésive à base de polyacrylate.

4. Utilisation selon la revendication 1, **caractérisée en ce que** la masse auto-adhésive est une masse auto-adhésive à base de caoutchoucs naturels et de synthèse, tels que le caoutchouc de butyle, le néoprène, le butadiène-acrylonitrile, les copolymères de styrène-butadiène-styrène et de styrène-isoprène-styrène.

5. Utilisation selon la revendication 1, **caractérisée en ce que** la masse auto-adhésive est une masse auto-adhésive à base de polyesters linéaires, de copolyesters, de polyuréthanes ou d'élastomères de polysiloxane.

6. Utilisation selon au moins l'une quelconque des revendications précédentes, **caractérisée en ce que** la masse auto-adhésive est, jusqu'à 35% en poids, à base de comonomères sous forme de composés de vinyle, en particulier à base d'un ou de plusieurs composés de vinyle choisis dans le groupe suivant :

esters de vinyle, halogénures de vinyle, halogénures de vinylidène, nitriles d'hydrocarbures éthyléniquement insaturés.

## Claims

1. Use of a pressure sensitive adhesive possessing anisotropic properties for producing punched products.

2. Use of Claim 1, **characterized in that** the pressure sensitive adhesive has been applied to one or both sides of a carrier material.

3. Use of Claim 1, **characterized in that** the pressure sensitive adhesive is one based on polyacrylate.

4. Use of Claim 1, **characterized in that** the pressure sensitive adhesive is one based on natural rubbers and synthetic rubbers such as butyl rubber, neoprene, butadiene-acrylonitrile, styrene-butadiene-styrene, and styrene-isoprene-styrene copolymers.

5. Use of Claim 1, **characterized in that** the pressure sensitive adhesive is one based on linear polyesters, copolyesters, polyurethanes or polysiloxane elastomers.

6. Use of at least one of the preceding claims, **characterized in that** up to 35% by weight of the pressure sensitive adhesive is based on comonomers in the form of vinyl compounds, in particular on one or more vinyl compounds chosen from the following group:

vinyl esters, vinyl halides, vinylidene halides, nitriles of ethylenically unsaturated hydrocarbons.

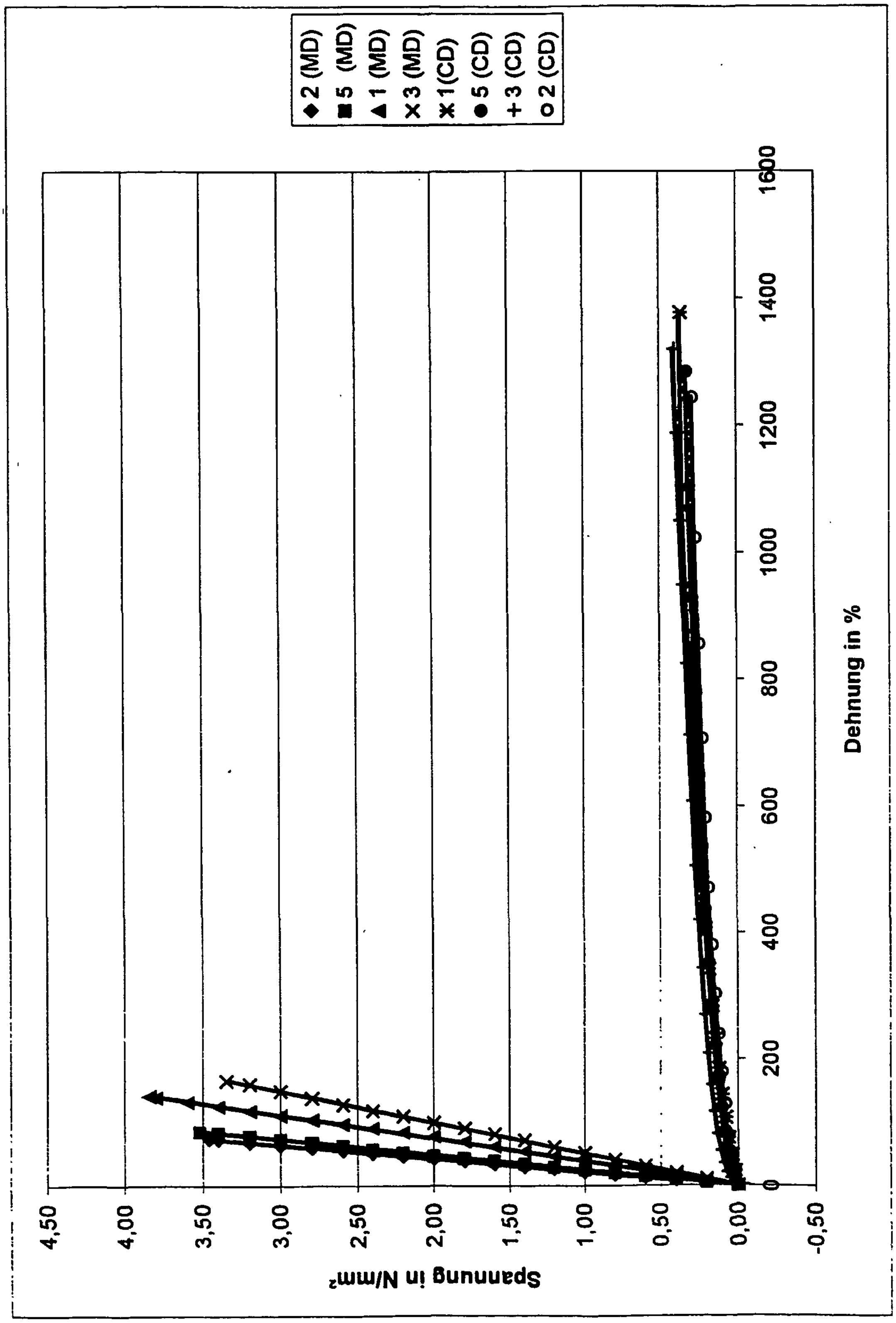


Zug/Dehn-Diagramme

Abbildung 1

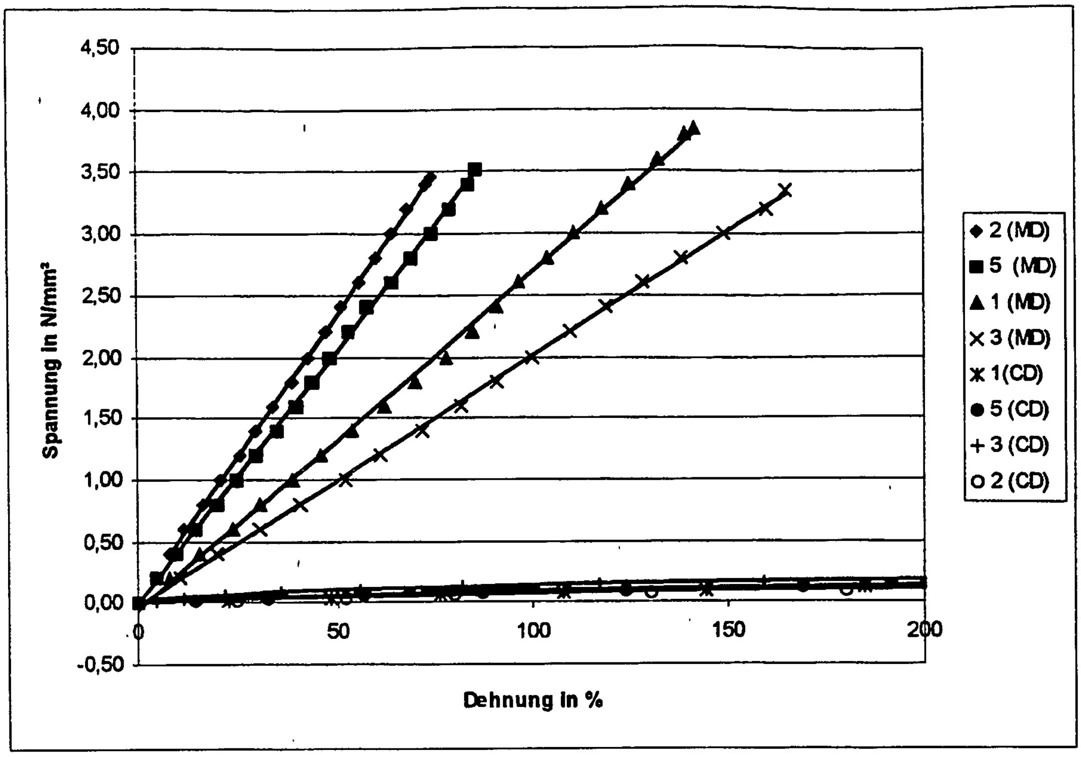


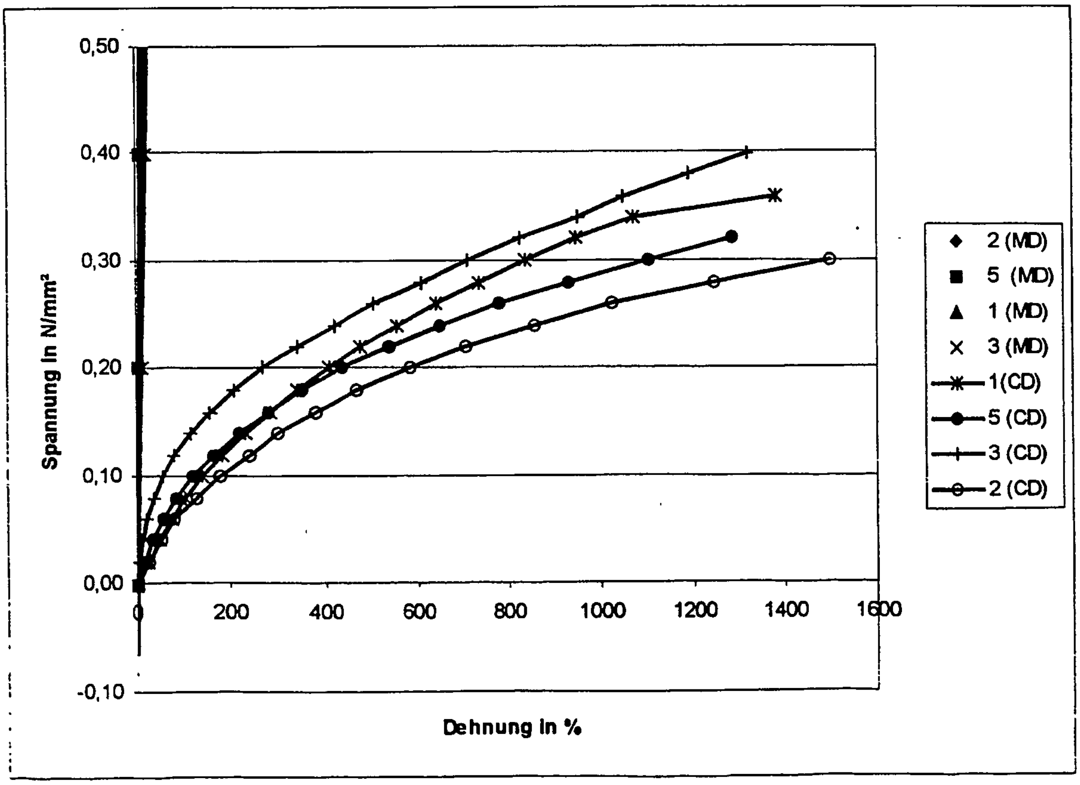


Detaildarstellungen aus Figur 1

Abbildung 2

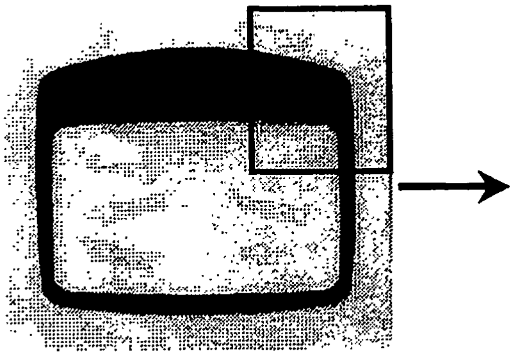

Abbildung 3a

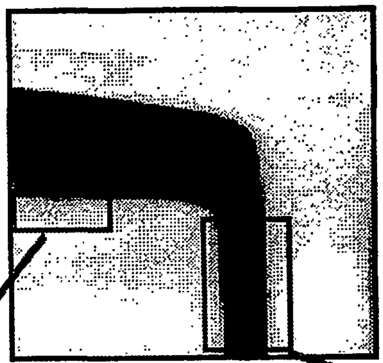

Abbildung 3b

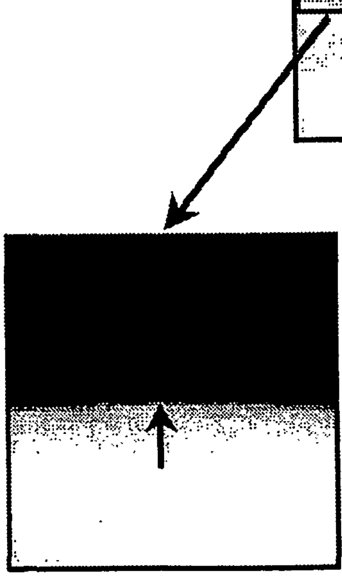

Abbildung 3c

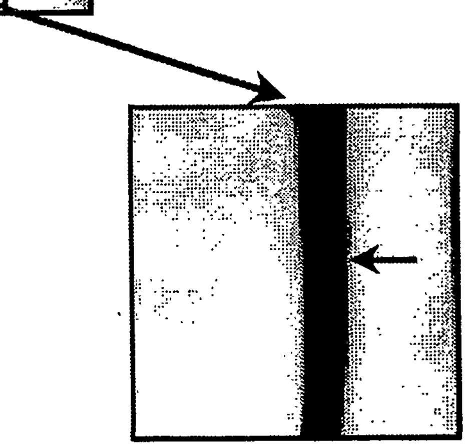

Abbildung 3d

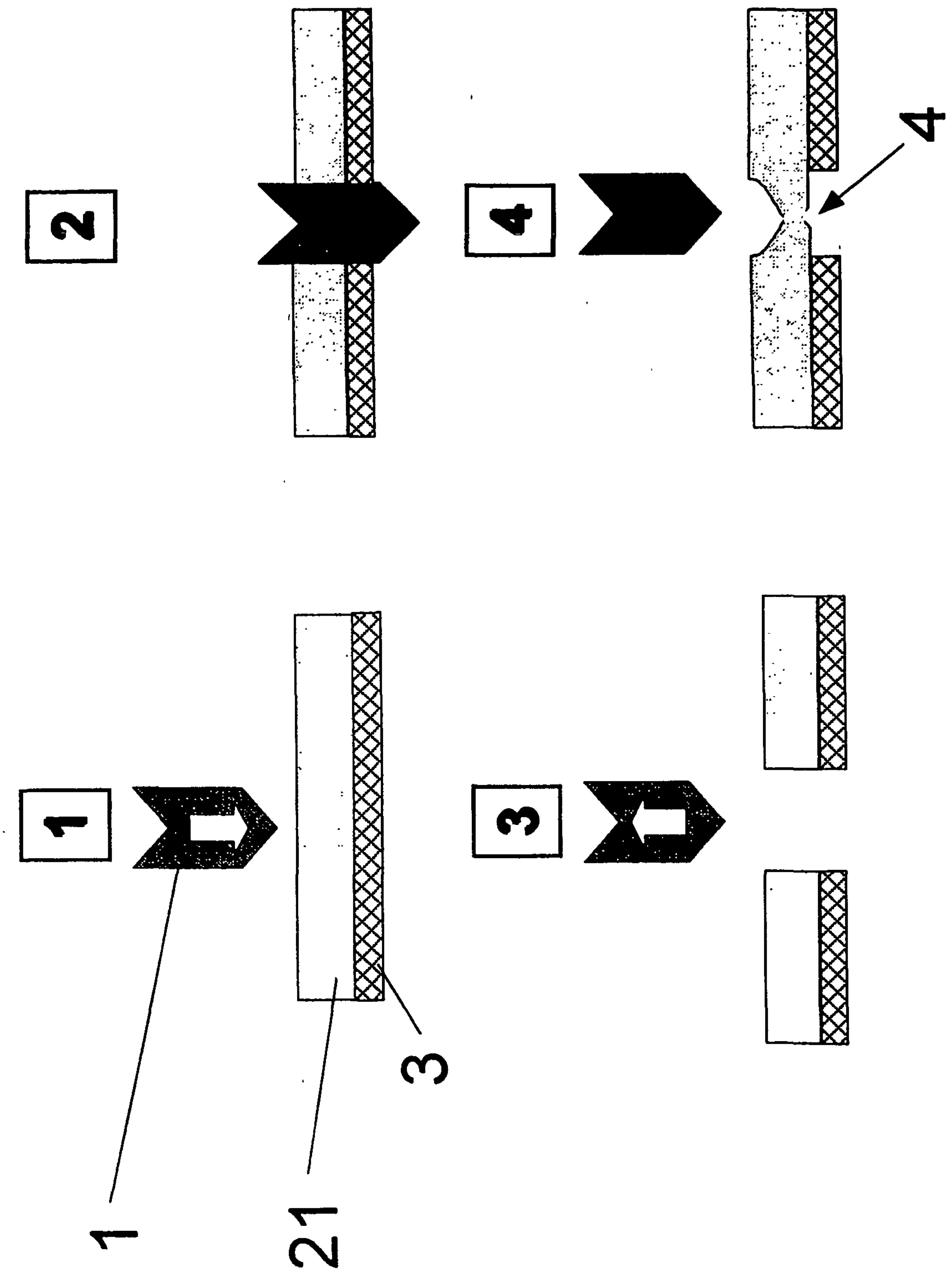


Abbildung 4a

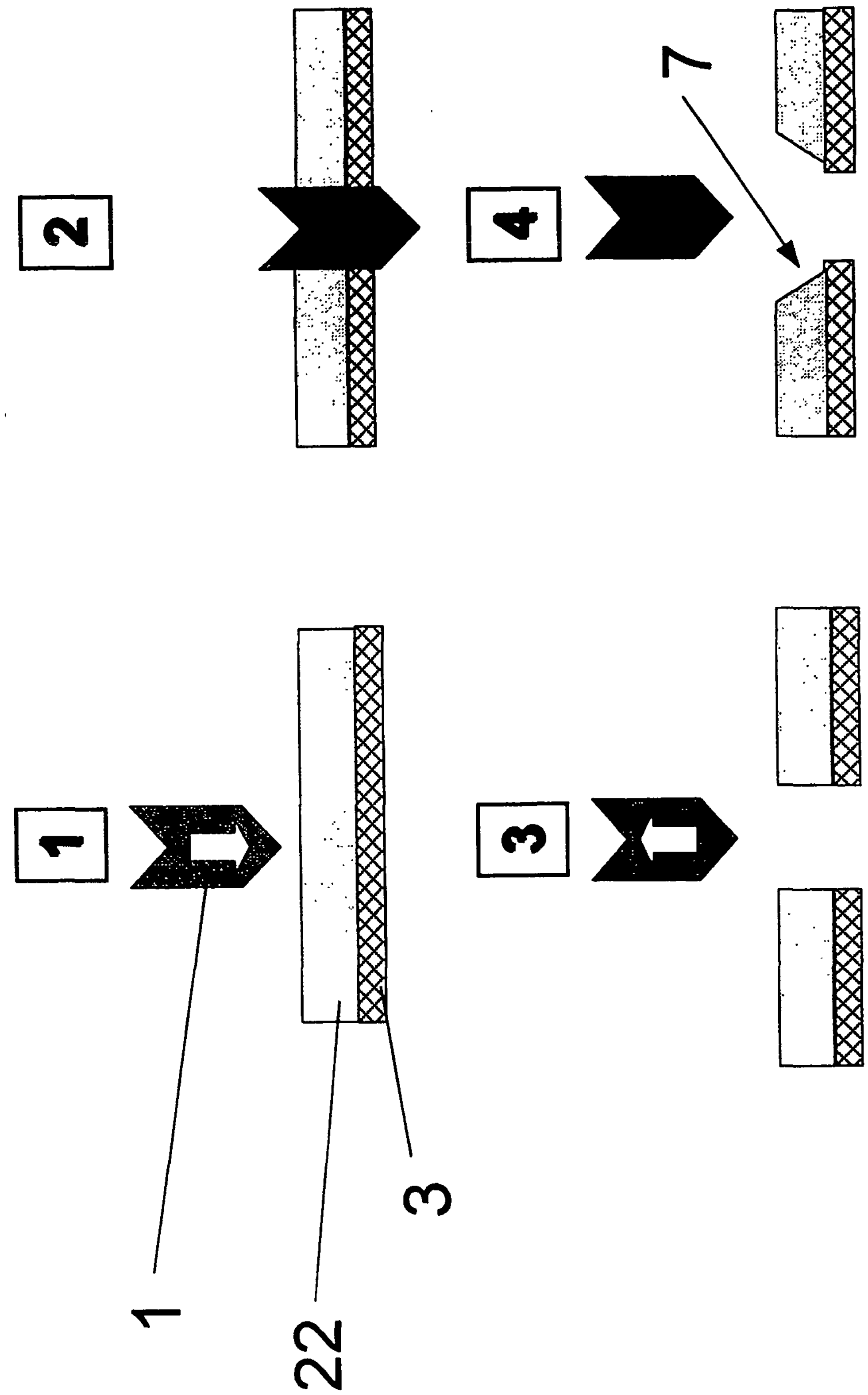


Abbildung 4b

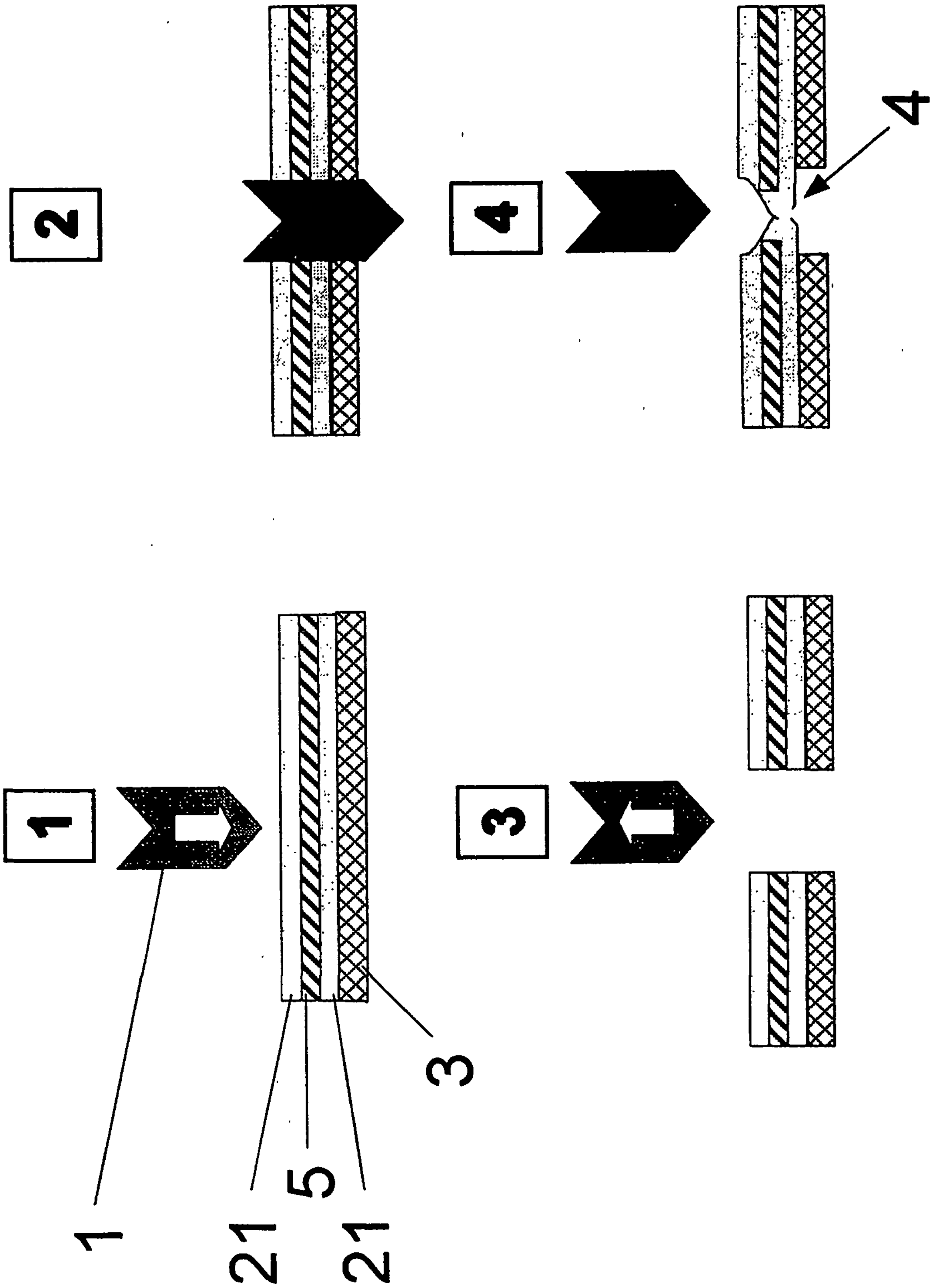


Abbildung 5a

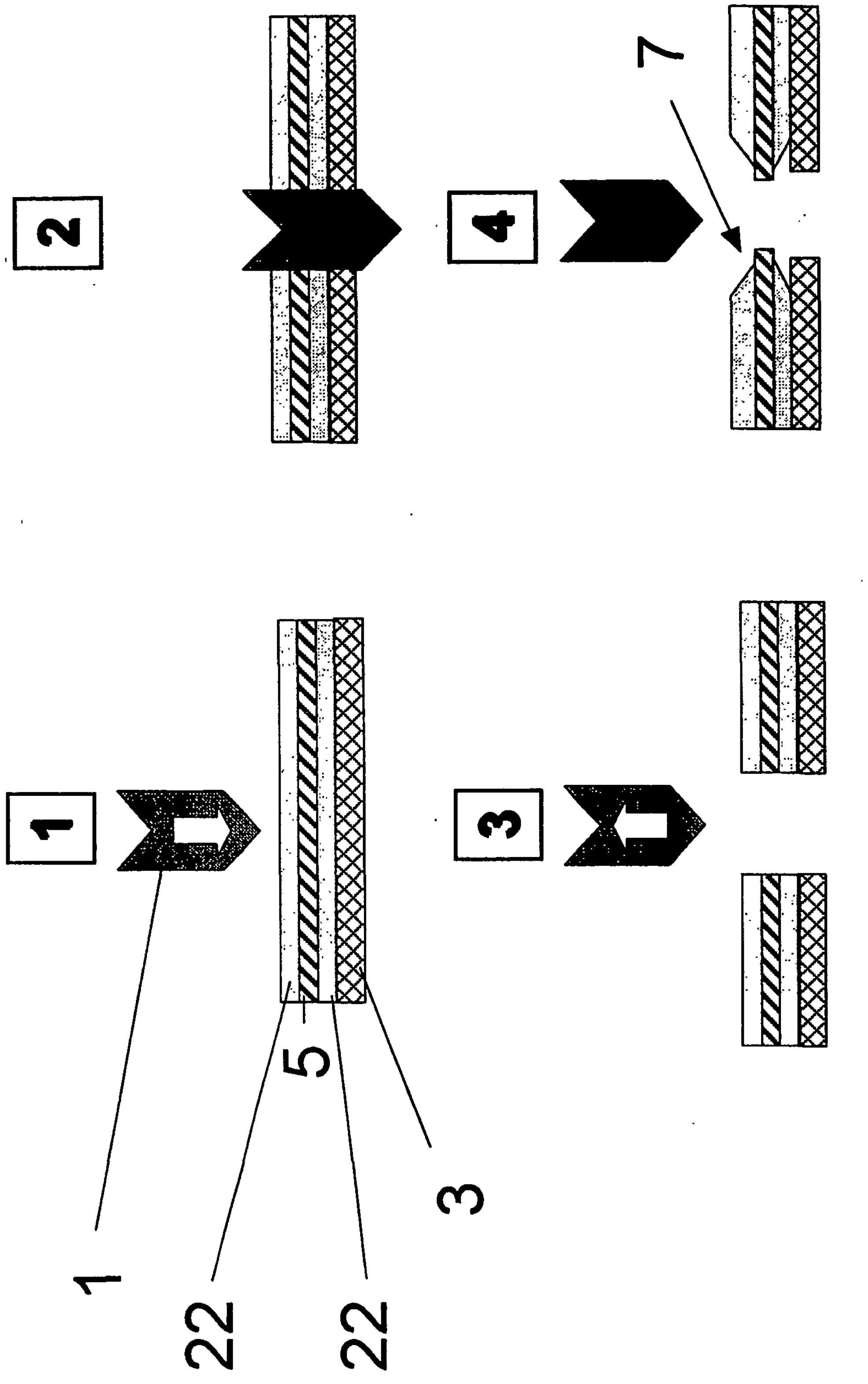


Abbildung 5b

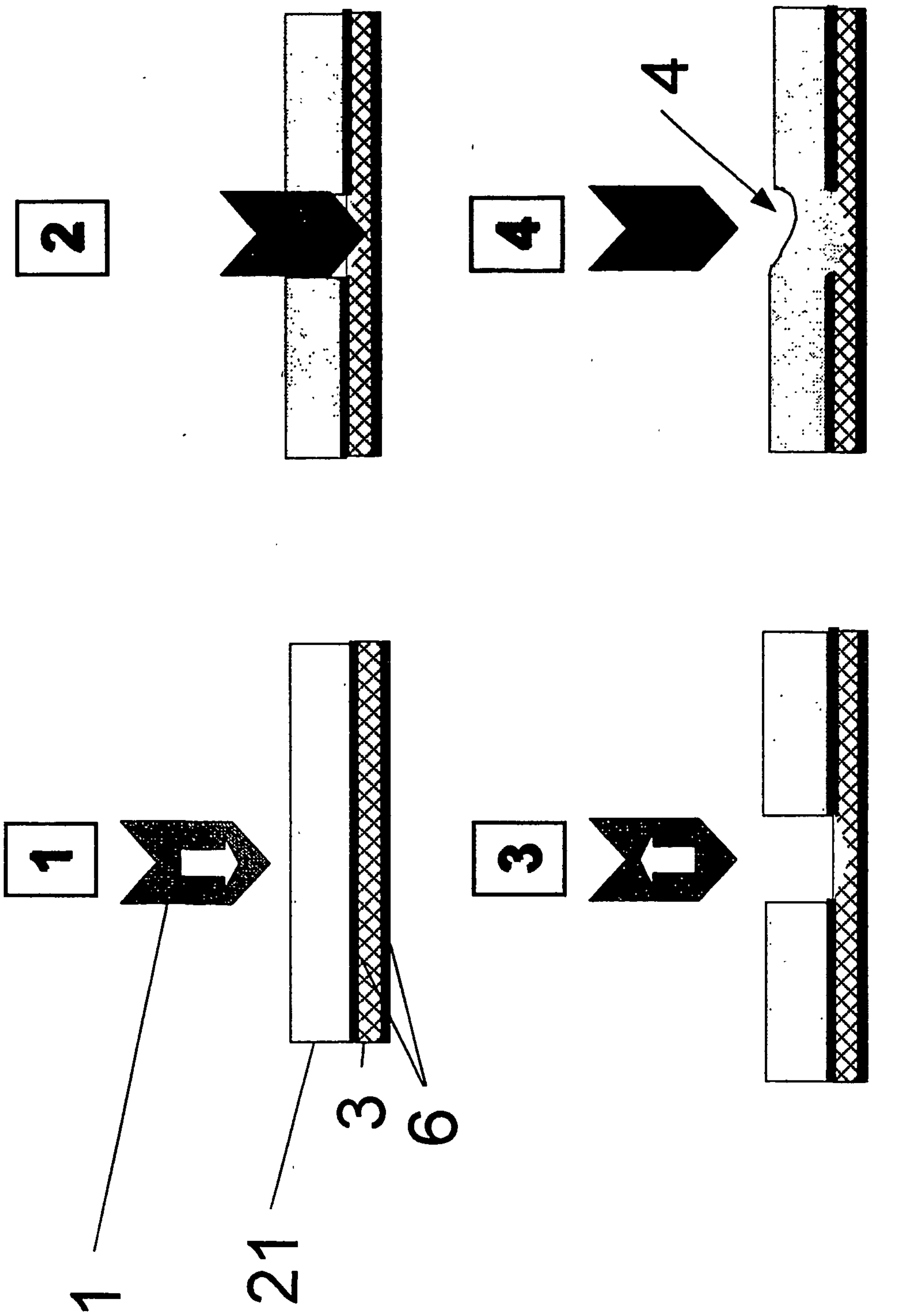


Abbildung 6a

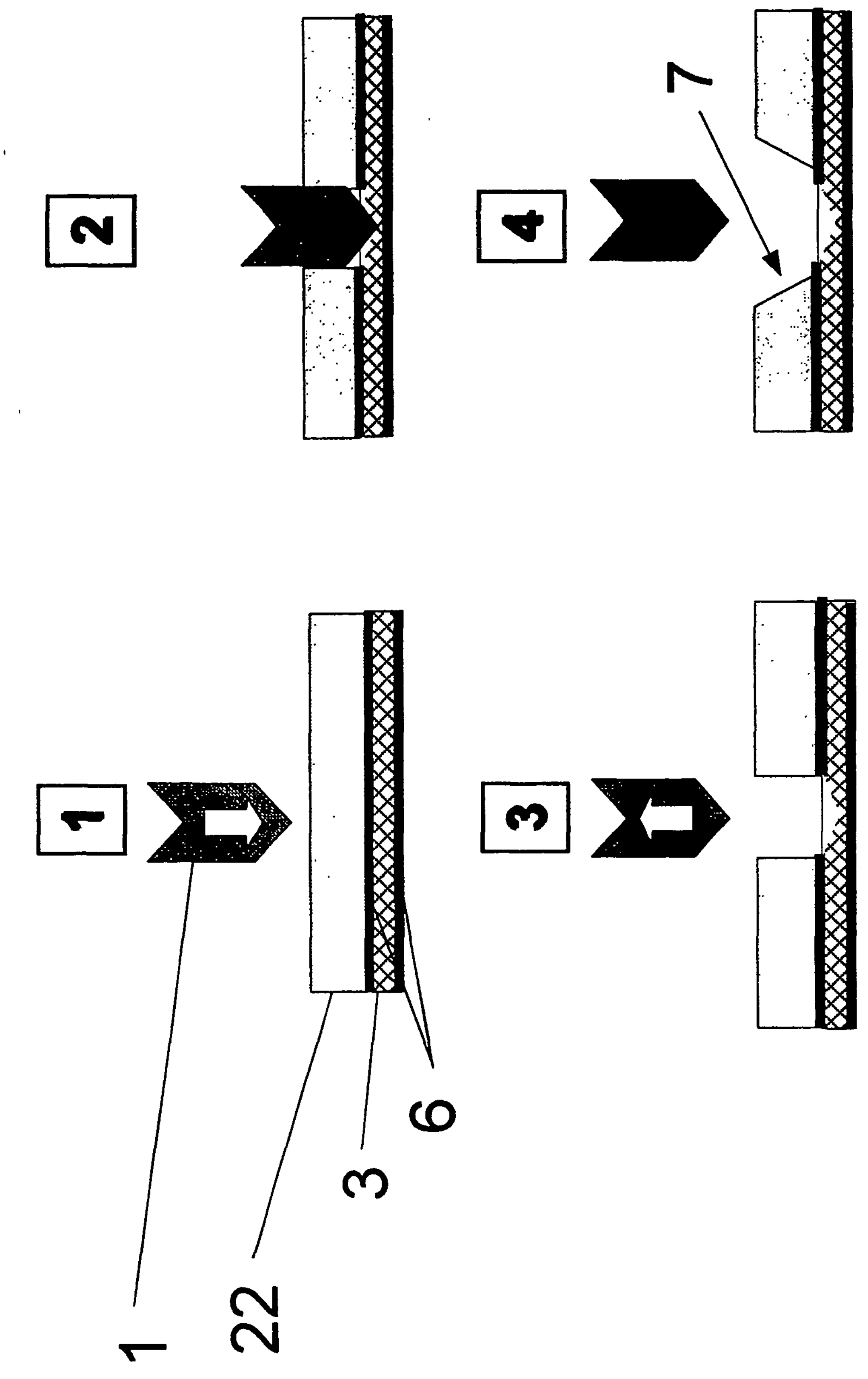


Abbildung 6b

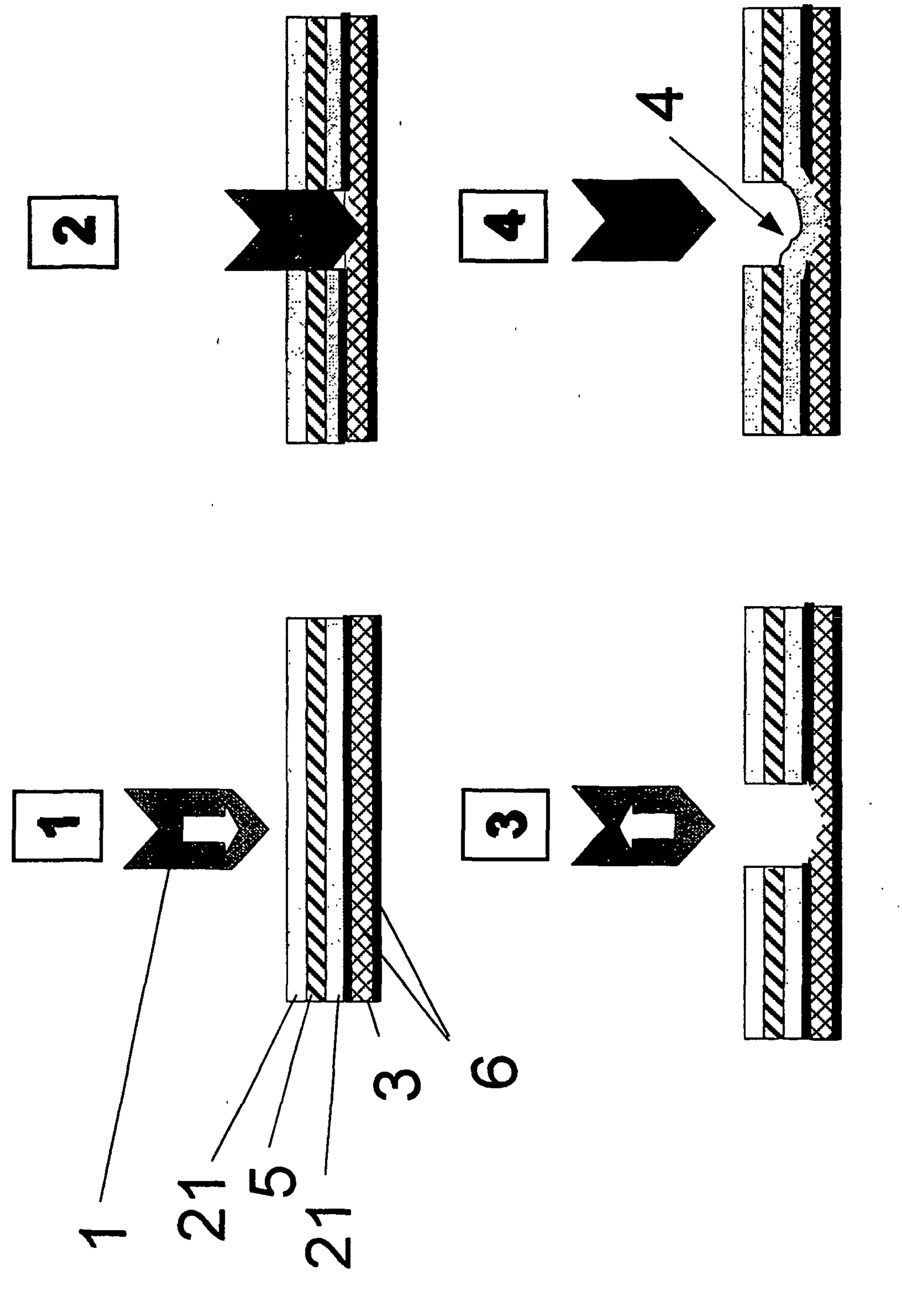


Abbildung 7a

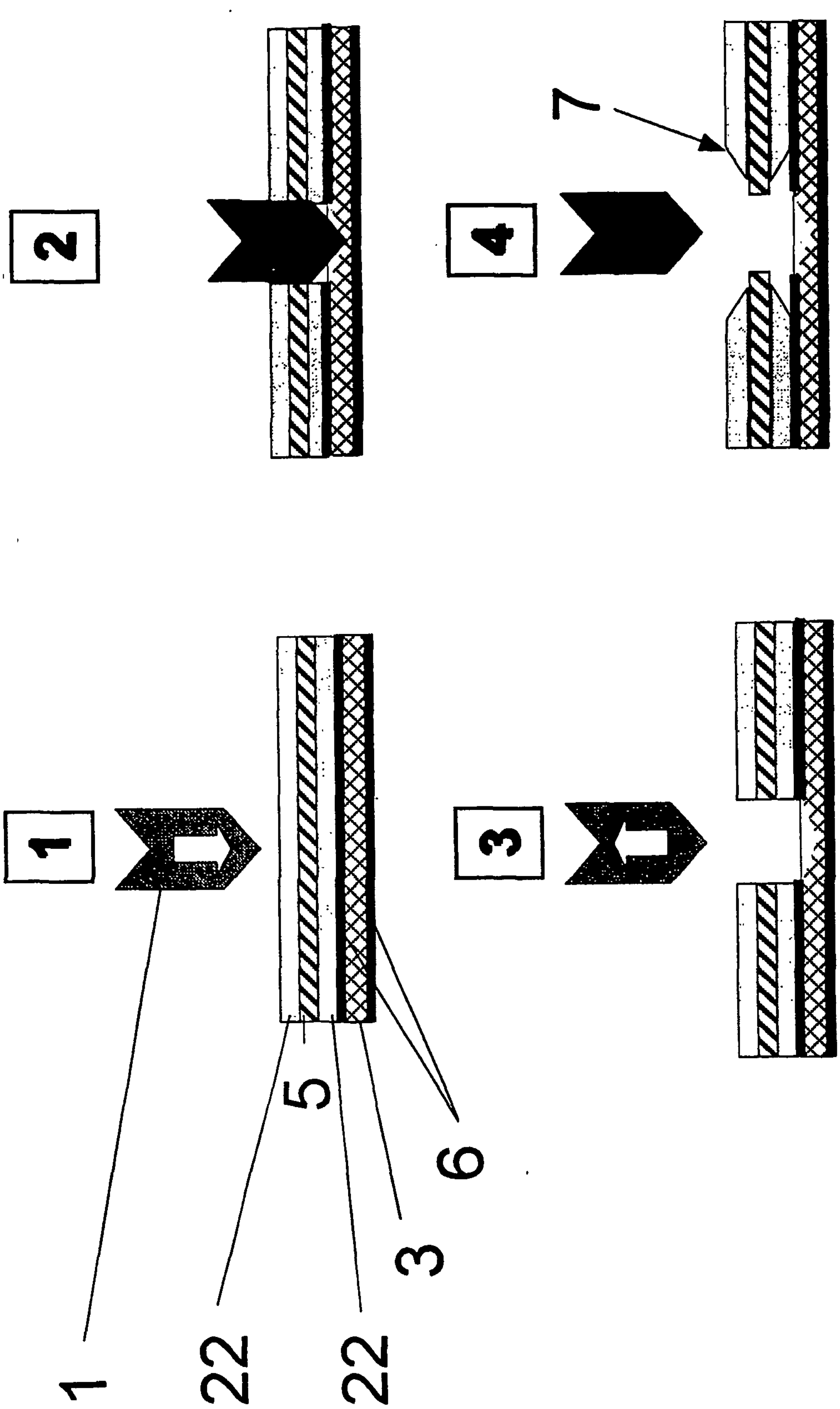


Abbildung 7b